(19) Europäisches Patentamt
European Patent Office
Office européen des brevets

(11) **EP 4 520 849 A1**

(12) **EUROPEAN PATENT APPLICATION**
published in accordance with Art. 153(4) EPC

(43) Date of publication:
**12.03.2025 Bulletin 2025/11**

(21) Application number: **23799614.5**

(22) Date of filing: **26.04.2023**

(51) International Patent Classification (IPC):
*C23C 2/12* (2006.01)   *C23C 2/02* (2006.01)
*C22C 38/04* (2006.01)   *C22C 38/02* (2006.01)
*C22C 38/00* (2006.01)   *C22C 38/14* (2006.01)
*C22C 38/12* (2006.01)   *C21D 8/02* (2006.01)

(52) Cooperative Patent Classification (CPC):
C21D 8/02; C22C 38/00; C22C 38/02; C22C 38/04;
C22C 38/12; C22C 38/14; C23C 2/02; C23C 2/12

(86) International application number:
**PCT/KR2023/005686**

(87) International publication number:
**WO 2023/214731 (09.11.2023 Gazette 2023/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.05.2022 KR 20220056159
19.12.2022 KR 20220178172**

(71) Applicant: **POSCO Co., Ltd
Pohang-si, Gyeongsangbuk-do 37859 (KR)**

(72) Inventors:
• **KIM, Sang-Heon**
**Gwangyang-si, Jeollanam-do 57807 (KR)**
• **OH, Jin-Keun**
**Gwangyang-si, Jeollanam-do 57807 (KR)**
• **KIM, Seong-Woo**
**Gwangyang-si, Jeollanam-do 57807 (KR)**
• **LEE, Sea-Woong**
**Gwangyang-si, Jeollanam-do 57807 (KR)**
• **HWANG, Hyeon-Seok**
**Gwangyang-si, Jeollanam-do 57807 (KR)**
• **OH, Kkoch-Nim**
**Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **HOT PRESS-FORMED PART AND MANUFACTURING METHOD THEREOF**

(57)   Provided are a hot press-formed part and a manufacturing method thereof, the hot press-formed part comprising: a base steel sheet; and a plating layer provided on at least one surface of the base steel sheet, wherein the plating layer includes an average number of Kirkendall voids per unit area in a specific range, in an area within 20 μm from the interface between the base steel sheet and the plating layer.

FIG. 1

EP 4 520 849 A1

**Description**

Technical Field

The present disclosure relates to a hot press-formed part mainly used for vehicle body parts, and a method of manufacturing the same.

Background Art

Recently, hot press-formed parts have been widely applied as structural parts of vehicles for improving fuel efficiency and protecting passengers by reducing vehicle weight. Particularly, hot press-formed parts may be used in bumpers, doors, or pillar reinforcements requiring ultra-high strength or energy absorption, and a representative technique for the hot forming technique may be cited document 1 (U.S. Registered Patent Publication No. 6296805).

The cited document 1 discloses that, by heating an Al-Si plated steel sheet to 850°C or more, and forming a structure of the part into martensite by hot forming and rapid cooling by pressing, ultra-high strength with high tensile strength may be assured. When the ultra-high strength steel for hot forming is applied, the steel is formed at high temperature such that complex shapes may be easily formed, and the effect of weight reduction due to high strength may be expected through an increase in strength due to rapid cooling in the die.

However, a martensite structure may have low resistance against hydrogen embrittlement. Particularly, parts manufactured by hot forming may have residual stress present therein due to rapid cooling after heating, and when the amount of diffusible hydrogen in steel increases, delayed fracture may occur due to hydrogen embrittlement, such that there may be the disadvantage that application of the part may be limited. Various studies have been conducted to overcome this issue.

Also, since changes in process parameters during manufacturing of a coil may cause entire or local changes in mechanical properties in a sheet, a steel composition which may be less sensitive to changes in specific manufacturing parameters for manufacturing a sheet having good mechanical properties and homogeneity may be necessary, and it may be necessary to prevent delayed fracture caused by hydrogen embrittlement. Particularly, diffusible hydrogen at a grain boundary may facilitate cracks in a grain boundary when stress occurs, it may be necessary to study the measure for reducing the amount of diffusible hydrogen in steel after hot press-forming (or hot stamping).

[Prior art]

[Patent Reference]

(Cited document 1) U.S. Registered Patent Publication No. 6296805

Detailed description of present disclosure

Technical problems to solve

An aspect of the present disclosure is to provide a hot press-formed part and a method of manufacturing the same.

Also, another aspect of the present disclosure is to provide a hot press-formed part having excellent hydrogen embrittlement resistance and a method of manufacturing the same. More particularly, in hot press-formed parts, by creating a concentrated layer and Kirkendall void in the plating layer above a predetermined level, a hot press-formed part having excellent hydrogen embrittlement resistance after hot forming, which may have the reduced amount of diffusible hydrogen remaining in steel after hot forming, and a method of manufacturing the same.

Further, another aspect of the present disclosure is to provide a hot press-formed part having excellent hydrogen embrittlement resistance and paint corrosion resistance, and a method of manufacturing the same.

Also, an aspect of the present disclosure is to provide a hot press-formed part having excellent hydrogen embrittlement resistance after hot press-forming by allowing a diffusion rate of Al and Fe in a diffusion layer to be non-uniform in a hot press-formed part mainly used in vehicle body parts so as to facilitate the creation of Kirkendall voids in the plating layer and to reduce the amount of diffusible hydrogen remaining in steel after hot forming, and a method of manufacturing the same.

The purpose of the present disclosure is not limited to the descriptions. Anyone with ordinary knowledge in the technical field to which the present disclosure belongs will have no difficulty understanding the additional purposes of the present disclosure from the overall descriptions of the specification of the present disclosure.

Solution to Problem

An aspect of the present disclosure provides a hot press-formed part comprising

a base steel sheet; and
a plating layer on at least one surface of the base steel sheet,
wherein the plating layer comprises an average number per unit area of Kirkendall voids having a long diameter of 0.5 $\mu$m-5 $\mu$m present in a region within 20 $\mu$m from an interface between the base steel sheet and the plating layer satisfies 8/1000 $\mu m^2$-100 /1000 $\mu m^2$.

An aspect of the present disclosure provides a method of manufacturing a hot forming part comprising

reheating a steel slab comprising, by weight%, C: 0.02-0.5%, Si: 0.001-2%, Al: 0.001-1%, Mn: 0.1-4%, P: 0.05% or lower (excluding 0%), S: 0.02% or lower (excluding 0%), N: 0.02% or lower (excluding 0%), Ti: 0.1% or lower (including 0%), B: 0.0001-0.01%, Mo: 1.00% or lower (including 0%), V: 1.00% or lower (including 0%), Ca: 0.01% or lower (including 0%), Nb: 0.1% or lower (including 0%), W: 1% or lower (including 0%), REM: 0.3% or lower (including 0%), and a balance of Fe and inevitable impurities, at 1050-1300°C;
obtaining a hot-rolled steel sheet by finish-rolling the reheated steel slab at 800-950°C;
coiling the hot-rolled steel sheet at 500-700°C;
pickling the coiled hot-rolled steel sheet such that a product of acid concentration and pickling time is 800-10,000g/L·s;
continuous annealing the pickled steel sheet by controlling an average temperature increase rate for each zone to satisfy equations 1 to 3 as below;
plating the continuously annealed steel sheet by immersing the steel sheet in a plating bath including aluminum or aluminum alloy; and
heat-treating the plated steel sheet at Ac3-950°C for 1-1000 seconds and hot press-forming the steel sheet:

$$1.5°C/s \leq \text{average temperature increase rate in zone 1 (°C/s)} \leq 10.0°C/s \qquad \text{[Equation 1]}$$

$$0.5°C/s \leq \text{average temperature increase rate in zone 2 (°C/s)} \leq 1.0°C/s \qquad \text{[Equation 2]}$$

$$0.01°C/s \leq \text{average temperature increase rate in zone 3 (°C/s)} \leq 0.4°C/s \qquad \text{[Equation 3]}$$

where zone 1 refers to a section until a surface temperature of the steel sheet reaches 500°C, zone 2 refers to a section until a surface temperature of the steel sheet reaches 500°C to 700°C, and zone 3 refers to a section until a surface temperature of the steel sheet reaches a maximum temperature.

An aspect of the present disclosure provides a hot press-formed part comprising

a base steel sheet; and
a plating layer on at least one surface of the base steel sheet,
wherein relational expression 2-1 as below is satisfied:

$$[\text{Relational expression 2-1}]$$

$$9.5 \leq D_{B2}/D_{A2} \leq 11.0$$

where $D_{B2}$ indicates an absolute value of $D_{Fe}/D_{Al}$ in a region in which an atomic content ratio of aluminum (Al) in the hot press-formed part is 0.25-0.45, $D_{A2}$ indicates an absolute value of $D_{Fe}/D_{Al}$ in a region in which an atomic content ratio of aluminum (Al) in the hot press-formed part is 0.25-0.45, and in this case, $D_{Fe}$ indicates diffusivity of iron (Fe), and $D_{Al}$ indicates diffusivity of aluminum (Al).

An aspect of the present disclosure provides a method of manufacturing a hot press-formed part comprising

reheating a steel slab comprising, by weight%, C: 0.02-0.5%, Si: 0.001-2%, Al: 0.001-1%, Mn: 0.1-4%, P: 0.05% or lower (excluding 0%), S: 0.02% or lower (excluding 0%), N: 0.02% or lower (excluding 0%), Ti: 0.1% or lower (including 0%), B: 0.0001-0.01%, Mo: 1.00% or lower (including 0%), V: 1.00% or lower (including 0%), Ca: 0.01% or lower (including 0%), Nb: 0.1% or lower (including 0%), W: 1% or lower (including 0%), REM: 0.3% or lower (including 0%), and a balance of Fe and inevitable impurities, at 1050-1300°C;

obtaining a hot-rolled steel sheet by finish-rolling the reheated steel slab at 800-950°C;

coiling the hot-rolled steel sheet at 500-700°C;

pickling the coiled hot-rolled steel sheet such that a product of acid concentration and pickling time is 800-10, 000g/L ·s;

continuous annealing the pickled steel sheet by controlling an average temperature increase rate for each zone to satisfy equations 1 to 3 as below;

plating the continuously annealed steel sheet by immersing the steel sheet in a plating bath including aluminum or aluminum alloy; and

heat-treating the plated steel sheet at Ac3-950°C for 1-1000 seconds and hot press-forming the steel sheet,

wherein, during the continuous annealing, a heat-treatment area over time at 700°C or higher satisfies 5, 000°C ·s -25, 000°C ·s:

$$1.5°C/s \leq \text{average temperature increase rate in zone 1 (°C/s)} \leq 10.0°C/s \qquad \text{[Equation 1]}$$

$$0.5°C/s \leq \text{average temperature increase rate in zone 2 (°C/s)} \leq 1.0°C/s \qquad \text{[Equation 2]}$$

$$0.01°C/s \leq \text{average temperature increase rate in zone 3 (°C/s)} \leq 0.4°C/s \qquad \text{[Equation 3]}$$

where zone 1 refers to a section until a surface temperature of the steel sheet reaches 500°C, zone 2 refers to a section until a surface temperature of the steel sheet reaches 500°C to 700°C, and zone 3 refers to a section until a surface temperature of the steel sheet reaches a maximum temperature.

Advantageous Effects of Invention

According to an aspect of the present disclosure, a hot press-formed part having excellent hydrogen embrittlement resistance and a method of manufacturing the same may be provided.

Also, according to an aspect of the present disclosure, a hot press-formed part having excellent hydrogen embrittlement resistance and paint corrosion resistance and a method of manufacturing the same may be provided.

Also, according to an aspect of the present disclosure, in a hot press-formed part mainly used in vehicle body parts, by allowing a diffusion velocity of Al and Fe in a diffusion layer to be non-uniform so as to facilitate the creation of Kirkendall voids in the plating layer and to reduce the amount of diffusible hydrogen remaining in steel after hot forming, a hot press-formed part having excellent hydrogen embrittlement resistance after hot press-forming and a method of manufacturing the same may be provided.

The various and beneficial advantages and effects of the present disclosure are not limited to the above descriptions, and may be more easily understood while describing the specific embodiment of the present disclosure.

Brief Description of Drawings

FIG. 1 is an image of a cross-sectional sample in a direction perpendicular to a rolling direction of a hot press-formed part obtained from embodiment 1 of the present disclosure, obtained using a scanning electron microscope (SEM) .

FIG. 2 is an image of a cross-sectional sample in a direction perpendicular to a rolling direction of a hot press-formed part obtained from embodiment 2-1, which is an example embodiment of the present disclosure, using a scanning electron microscope (SEM).

FIG. 3 illustrates a heat-treated area (that is, a surface-concentration heat-treated area) over time in a heat-treatment section above 700°C in a continuous annealing process according to an example embodiment of the present disclosure.

FIG. 4 is a graph of lnC vs. $x^2$ in a plating layer of a hot press-formed part according to an example embodiment of the present disclosure.

Best Mode for Invention

Hereinafter, preferable embodiments of the present disclosure will be described. However, the embodiment of the present disclosure may be modified with various other forms, and the scope of the present disclosure is not limited to the embodiment described below. Also, embodiments of the present disclosure are provided to more fully describe the present disclosure to a person having average knowledge in the relevant technique field.

The present inventors discovered that reducing the amount of diffusible hydrogen absorbed during heat-treatment of hot press-forming may suppress defects due to hydrogen delayed fracture. Specifically, in hot press-forming, during a process of heating a blank having a plating layer formed of aluminum or aluminum alloy, water vapor present in a heat-treatment furnace may be adsorbed on the blank surface. Thereafter, hydrogen generated as water dissociates may be absorbed into steel during an austenite phase having high hydrogen solubility at high temperature. When rapid cooling occurs due to hot press-forming and the phase changes to a martensite phase, solubility of hydrogen may deteriorate rapidly, and an alloy plating layer formed when the plating layer is alloyed may act as an obstacle preventing hydrogen from being released. Accordingly, a significant amount of diffusible hydrogen content may remain in the steel, and accordingly, the likelihood of cracks formed due to hydrogen delayed fracture may increase. In this respect, reducing the amount of diffusible hydrogen absorbed during heat-treatment may be an important factor in suppressing defects.

Accordingly, the present inventors found out and confirmed that, by forming various concentrated layers on a base iron surface, Kirkendall voids may be formed above a predetermined level in the plating layer. It was confirmed that the Kirkendall void created as above may trap hydrogen permeating into the steel during hot press-forming, may effectively block diffusible hydrogen diffusing in the steel and reducing the content thereof, and consequently assumed that the effect of improving hydrogen embrittlement resistance may be expected.

Also, to assure hydrogen embrittlement resistance, the inventors found out that the amount of diffusible hydrogen in the hot forming part may need to satisfy 0.2 ppm to ensure excellent hydrogen embrittlement resistance. This may be because the part having the amount of diffusible hydrogen of 0.2ppm or less may not generate cracks even when the sample is stressed by bending by applying stress of the same yield strength for 120 hours.

In the description below, the hot press-formed part according to an aspect of the present disclosure may be described in detail.

According to an aspect of the present disclosure, the hot press-formed part may include a base steel sheet, and a plating layer provided on at least one surface of the base steel sheet.

First, the alloy composition of the base steel sheet according to an aspect of the present disclosure may be described below. It should be noted that when the content of each element in the present disclosure is represented in weight% unless otherwise indicated.

Carbon (C): 0.02-0.5weight%

C may increase strength of the heat-treatment part and may improve hardenability, and may be added as an essential element to control strength control in an appropriate content. When the C content is less than 0.02%, hardenability may be low such that it may be difficult to assure sufficient strength, and it may be difficult to apply to a hot press part. Thus, C may be added in an amount of 0.02% or higher. Also, when the content thereof exceeds 0.5%, strength may increase excessively, which may cause brittleness and may deteriorate weldability. Thus, an upper limit thereof may be preferably 0.5% or lower.

Silicon (Si): 0.001-2weight%

Si may need to be added as a deoxidizer in steelmaking, and may be effective to obtain a uniform internal structure as a solid-solution strengthening element and carbide formation suppressing element, and may also be added as an element for contributing to increasing strength of the hot press-formed part and effective in material uniformity. When the content is less than 0.001%, the above effect may not be expected, and processing costs for controlling the Si content may be excessive. When the Si content exceeds 2%, excessive Si oxide may be created on the steel sheet surface during annealing such that coatability may be greatly degraded, and thus, Si may be added in an amount of 2% or lower.

Manganese (Mn): 0.1-4 weight%

Mn may need to be added to ensure desired strength due to the solid-solution strengthening effect, and also to suppress ferrite formation during hot press-forming by improving hardenability. When the Mn content is less than 0.1%, it may be difficult to obtain the sufficient hardenability effect, and it may be necessary to excessively add other expensive alloy elements for insufficient hardenability, which may significantly increase manufacturing costs. Also, when the Mn content exceeds 4%, a banded structure arranged in the microstructure in a rolling direction may increase, which may cause nonuniformity of an internal structure and may degrade collision resistance, and thus, Mn may be added in an amount of 4% or lower.

Phosphorus (P): 0.05 weight% or lower (excluding 0%)

P may be present as an impurity in steel, and when the maximum content thereof exceeds 0.05%, material properties may be deteriorated due to weldability of a hot forming part and high temperature grain boundary segregation. Thus, an upper limit thereof may be 0.05%. However, considering that P may be inevitably included as an impurity, a lower limit of the P content may be 0%, or 0.5 ppm, excluding 0%.

Sulfur (S): 0.02 weight% or lower (excluding 0%)

S may be an impurity, and may inhibit ductility, impact properties and weldability of the part, and thus, the maximum content thereof may be limited to 0.02%. However, considering that S may be inevitably included as an impurity, a lower limit of the S content may be 1 ppm, excluding 0%.

Aluminum (Al): 0.001-1 weight%

Al, along with Si, may act as a deoxidizer in steelmaking and may increase cleanliness of steel. When the Al content is less than 0.001%, it may be difficult to obtain the above effect, and the manufacturing process cost for controlling the Al content may be excessive, which may be unpreferable. Also, when the content thereof exceeds 1%, high-temperature ductility due to excessive AlN precipitate formed during a continuous casting process may decrease, and slab cracks may be formed, which may cause manufacturing problems, and thus, an upper limit thereof may be determined to be 1%.

Nitrogen (N): 0.02 weight% or lower (excluding 0%)

N may be included as an impurity in steel. When the N content exceeds 0.02%, it may be likely that slab cracks may be formed due to AlN formation, together with added Al, and thus, an upper limit thereof may be determined to be 0.02%. However, considering that N may be inevitably included as an impurity, a lower limit of the N content may be 1 ppm, excluding 0%.

Titanium (Ti): 0.1% or lower (including 0%)

Ti may combine with nitrogen remaining as impurities in steel and may create TiN, such that TI may protect B from becoming a compound to ensure hardenability. Accordingly, Ti may be added selectively to assure the above effect, and through the formation of TiC precipitate by the addition of Ti, the effect of precipitation strengthening and grain refinement may be expected. When the content exceeds 0.1%, a large amount of coarse TiN may be formed and a steel material may deteriorate, such that an upper limit thereof may be determined to be 0.1%. Meanwhile, although not limited to any particular example, and as an example, a lower limit of the Ti content may be 0.001%, and Ti may be optionally included by 0.001-0.1%.

Vanadium (B): 0.0001-0.01%

B may effectively improve hardenability, and may be segregated at a grain boundary of prior austenite and may suppress brittleness of the hot forming part due to segregation of impurities P or/and S at the grain boundary. To control the content of B to less than 0.0001%, excessive processing costs may be necessary, which may not be preferable. Also, when the content thereof exceeds 0.01%, a $Fe_{23}CB_6$ compound may be formed such that brittleness may be caused in hot-rolling, and thus, an upper limit thereof may be determined to be 0.01%.

Molybdenum (Mo): 1.00% or lower (including 0%)

Mo may effectively improve hardenability and may be selectively included, and an upper limit of the added amount thereof may be 1.00% to prevent the problem of excessive manufacturing costs. Meanwhile, although not limited to any particular example, and as an example, a lower limit of the Mo content may be 0.001%, and Mo may optionally be included at 0.001-1.00%.

Vanadium (V): 1.00% or lower (including 0%)

V may improve hydrogen embrittlement resistance by forming carbide and reducing a grain boundary, and may be optionally included. To prevent the problem of excessive manufacturing costs, an upper limit of the added amount thereof may be 1.00%. Meanwhile, although not limited to any particular example, and as an example, a lower limit of the V content may be 0.001%, and V may optionally be included at 0.001-1.00%.

Calcium (Ca): 0.01% or lower (including 0%)

Ca may be selectively included as an element to improve steel cleanliness by removing P and S to a predetermined level during steelmaking, and an upper limit of the added amount thereof may be 0.01% to prevent the problem of excessive manufacturing costs. Meanwhile, although not limited to any particular example, and as an example, a lower limit of the Ca content may be 0.001%, and Ca may optionally be included at 0.001-0.01%.

Neobium (Nb): 0.1% or lower (including 0%)

Nb may improve hydrogen embrittlement resistance by forming carbides and reducing grain boundaries, and may be selectively included. To prevent the problem of excessive manufacturing costs, an upper limit of the added amount thereof may be 0.1%. Meanwhile, although not limited to any particular example, and as an example, a lower limit of the Nb content may be 0.001%, and Nb may optionally be included at 0.001-0.1%.

Tungsten (W): 1% or lower (including 0%)

W may improve hydrogen embrittlement resistance by forming carbide and allowing a grain boundary to be fine, and may be optionally included. To prevent the problem of excessive manufacturing costs, an upper limit of the added amount thereof may be 1%. Meanwhile, although not limited to any particular example, and as an example, a lower limit of the W content may be 0.001%, and W may optionally be included at 0.001-1%.

Rare earth metals (REM): 0.3% or lower (including 0%)

Rare earth metals (REM) may be included during steelmaking. When the content thereof exceeds 0.3%, REM may be excessively segregated at a grain boundary and hydrogen embrittlement resistance may be deteriorated. Accordingly, REM may be optionally added to 0.3% or lower. Meanwhile, although not limited to any particular example, and as an example, a lower limit of the REM content may be 0.001%, and REM may optionally be included at 0.001-0.3%.

Group 1 elements: 0.005-1weight%

The base steel sheet may further comprise 0.005 weight%-1 weight% of one or more of group 1 elements selected from a group consisting of Sb, Sn, As, Bi, Cu and Ni, independently.

When the group 1 elements are added, in a plating layer of a hot press-formed part, a region in which a concentration of the group 1 elements is concentrated in a surface region from an interface between the base steel sheet and the plating layer toward the plating layer may be present. As the concentrated region of the group 1 elements is formed, diffusivity of aluminum (Al) and iron (Fe) diffusing mutually during high-temperature heat-treatment may become non-uniform, such that formation of Kirkendall voids in the plating layer may be facilitated after hot press-forming. Accordingly, when the content of each group 1 element is less than 0.005%, the concentrated layer may not be sufficiently formed and the formation of the Kirkendall void described above may not occur sufficiently, such that it may be difficult to expect an improvement in hydrogen embrittlement resistance. When the content of each group 1 element exceeds 1%, the cost of alloy iron may increase, and voids in the plating layer may be excessively formed, such that, due to peeling of plating due to stress applied during hot forming, deterioration of corrosion resistance may occur.

Alternatively, to further improve the effect, a lower limit of the group 1 elements content may be 0.008%, or an upper limit of the group 1 elements content may be 0.95%.

Alternatively, according to an aspect of the present disclosure, to further improve the aforementioned effect, among the group 1 elements, one or more elements selected from a group consisting of Sb, Sn, As and Bi may be independently added at 0.005-0.1%. Alternatively, to further improve the effect, a lower limit of the content of one or more elements selected from a group consisting of the Sb, Sn, As and Bi may be 0.01%, or an upper limit of the content of one or more elements selected from a group consisting of the Sb, Sn, As and Bi may be 0.09%.

Also, according to an aspect of the present disclosure, to further improve the aforementioned effect, among the group 1 elements, one or more elements selected from a group consisting of Cu and Ni may be added in an amount of 0.05-1% independently. Alternatively, to further improve the effect, a lower limit of the content of one or more elements selected from a group consisting of the Cu and Ni may be 0.1%, or an upper limit of the content of one or more elements selected from a group consisting of the Cu and Ni may be 0.9%.

A remainder other than the above-the elements may be iron (Fe), and as long as the element may be included in the steel sheet for hot press-forming, there may be no particular limitations on the addition thereof. Also, in a general manufacturing process, inevitable impurities may be inevitably added from raw materials or an ambient environment, and thus, impurities may not be excluded. A person skilled in the art of a general manufacturing process may be aware of the impurities, and thus, the descriptions of the impurities may not be provided in the present disclosure.

In the present disclosure, the type of the plating layer is not particularly limited, and any plating layer applied to a general plating steel sheet for hot forming may be applied to the present disclosure without limitations. As an example, the plating layer may be an aluminum or aluminum alloy plating layer, and preferably, the plating layer may comprise Si: 6-12%, Fe: 4% or lower (including 0%), and a balance of Fe and inevitable impurities.

Alternatively, as another example, in the case of a molten plating layer, a molten aluminum plating layer, molten Al-Si plating layer, molten Al-Si-Mg plating layer, molten Al-Zn plating layer, or molten Al-Mg plating layer may be applied. Examples of the alloyed molten plating layer may include an alloyed molten aluminum plating layer, alloyed molten Al-Si plating layer, alloyed molten Al-Si-Mg plating layer, alloyed molten Al-Zn plating layer, and alloyed molten Al-Mg plating layer. The plating layer may comprise at least one of Mn, Cr, Cu, Mo, Ni, Sb, Sn, Ti, Ca, Sr, Mg, Be, Li, and Na. The coating amount of the plating layer is not particularly limited, and may be, for example, a coating amount within a general range.

As for the plating layer, the hot press-formed part may satisfy that an average number per unit area of Kirkendall voids with a long diameter of $0.5 \mu m$-$5 \mu m$ present in a region within $20 \mu m$ from an interface between the base steel sheet and the plating layer may be $8/1000 \mu m^2$-$100/1000 \mu m^2$.

Kirkendall voids may be formed from the interface between the base iron and the plating layer created due to the addition of the group 1 elements and impurities toward the plating layer side. Among the Kirkendall voids formed as above, the Kirkendall voids of a predetermined size (a long diameter $0.5 \mu m$-5 um) formed in a region within $20 \mu m$ from the interface between the base iron and the plating layer may suppress hydrogen brittleness occurring in the part after hot forming by reducing the amount of diffusible hydrogen permeating into the steel during hot press-forming. In other words, a Kirkendall void having a long diameter of less than $0.5 \mu m$ may not effectively trap hydrogen absorbed during heat-treatment for hot press-forming, such that the effect of improving hydrogen embrittlement resistance may be minimal. Also, a Kirkendall void having a long diameter exceeding $5 \mu m$ may act as defects, which may cause peeling of plating and may deteriorate paint corrosion resistance due to partial peeling of plating during hot forming.

Accordingly, the present inventors have conducted extensive research and found out that, by determining the average number per unit area of Kirkendall voids having a predetermined size to be within an appropriate range, excellent hydrogen embrittlement resistance and paint corrosion resistance may be assured. Specifically, when the average number per unit area of the Kirkendall voids is less than $8/1000 \mu m^2$, permeating diffusible hydrogen may not be sufficiently blocked, such that the part may become vulnerable to hydrogen brittleness, which may be problematic. Conversely, when the average number of the Kirkendall voids exceeds $100/1000 \mu m^2$, peeling of plating may occur due to stress applied during hot press-forming, which may deteriorate corrosion resistance of the part.

According to an aspect of the present disclosure, to further improve upon the effect, a lower limit of the average number per unit area of the Kirkendall voids may be $10/1000 \mu m^2$, or $18/1000 \mu m^2$.

According to an aspect of the present disclosure, to further improve the effect, an upper limit the average number per unit area of the Kirkendall void may be $95/1000 \mu m^2$, or $92/1000 \mu m^2$.

Meanwhile, since the descriptions known in the relevant technique field are equally applicable to the Kirkendall void, the Kirkendall void may not be separately defined in this specification.

In this specification, the method of measuring the average number per unit area of the Kirkendall voids may not be limited to any particular example, and may be measured by observing a cross-section of the structure (e.g., collecting a sample in a direction perpendicular to the rolling direction) using a scanning electron microscope (SEM) as an example.

In this case, the interface between the base steel sheet and the plating layer may be distinct by a difference in contrast through SEM/OM observation, or may also be distinct by component analysis through SEM-EDS, or EPMA. In other words, when measuring through the base steel sheet-plating layer through a line profile, the interface between the base steel sheet and the plating layer may be determined as the point at which the Al content is 2 weight%, and when the content exceeds 2%, the region may be classified as a plating layer, and when the content is 2% or lower, the region may be classified as base iron.

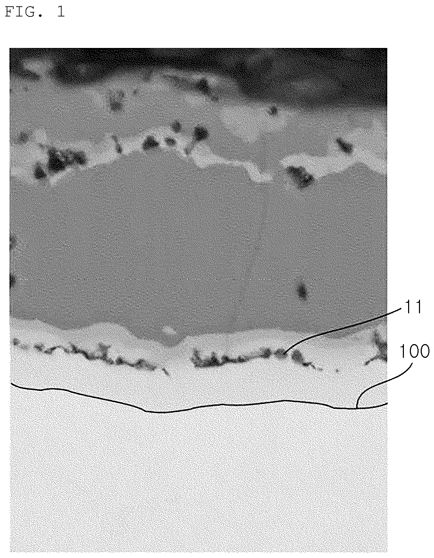

Meanwhile, when a parallel line is drawn $20 \mu m$ away from an interface line of the interface separating the base steel sheet and the plating layer, as illustrated in FIG. 1, the portion having black contrast present in a region within $20 \mu m$ from the interface 100 may be identified as Kirkendall void 11.

Also, in this specification, the long diameter of the Kirkendall void may refer to an equivalent circular diameter when assuming an ideal circle having the same area for each Kirkendall void.

Also, the method of measuring the average number per unit area of the Kirkendall voids may not be limited to any particular example, and the average number may be measured using a general method. For example, a plurality of samples (e.g., 3) having a 1000 $\mu m^2$ area may be collected, the number of Kirkendall voids completely included within the 1000 $\mu m^2$ area of each sample may be measured, and an average thereof may be calculated, thereby measuring an average number per unit area of the aforementioned Kirkendall voids. However, since the number of the plurality of samples may be two or more, which may be sufficient, the number is not limited to any particular example.

According to an aspect of the present disclosure, the hot press-formed part may comprise the base steel sheet further comprising one or more group 1 elements selected from a group consisting of Sn, As, Bi, Cu and Ni, and relational expression 1 may be satisfied.

[Relational expression 1]

$$\frac{X_{\max}}{X_{coat}} \geq 1.5$$

(in relational expression 1, $X_{coat}$ may indicate an average X content in the plating layer, $X_{max}$ may indicate a maximum value of an X content in the plating layer, and X may indicate one or more group 1 elements selected from a group consisting of Sb, Sn, As, Bi, Cu and Ni.)

The $X_{coat}$ and $X_{max}$ may be a unit representing content, and since it is sufficient for the units to be unified when calculating the relational expression 1, the unit is not limited to any particular example, and, as an example, the unit may be weight%. The method of measuring the $X_{coat}$ and $X_{max}$ is also not limited to any particular example.

However, as an example, the contents may be measured by analyzing the content change of group 1 elements from a predetermined point on the plating layer surface in the thickness direction of the base steel sheet using glow discharge optical emission spectrometry (GDS). In this case, it is necessary to note that each of group 1 elements may individually satisfy the value of the relational expression 1, as for one of group 1 elements.

$X_{coat}$, which is the average X content within the plating layer, may be measured by calculating the average value of the X contents at each point when the region from the plating layer surface to the interface between the base steel sheet and the plating layer is divided by the same distance in the thickness direction (e.g., in the direction perpendicular to the rolling direction) in the GDS profile. In this case, the interface between the base steel sheet and the plating layer may be determined as the point at which the Al content is 2 weight% on the GDS profile.

According to an aspect of the present disclosure, when the hot press-formed part does not satisfy the relational expression 1, a difference in Fe and Al diffusion gradients during hot forming may not be sufficiently created, such that it may be difficult to sufficiently promote the formation of Kirkendall voids within the plating layer. Accordingly, it may be difficult to assure the effect of the present disclosure as it may be difficult to obtain the effect of reducing the amount of diffusible hydrogen in steel.

In the description below, [the method of manufacturing the hot forming part] may be described.

Reheating slab

First, the steel slab may be reheated at 1050-1300°C. When the reheating temperature is less than 1050°C, the slab structure may not be sufficiently homogenized, such that, when using precipitated elements, it is less likely that solid-solution may occur again. When the reheating temperature exceeds 1300°C, an excessive oxidation layer may be formed, which may increase manufacturing costs for removing the oxidation layer and may increase the possibility of surface defects after finish-rolling.

Finish-rolling

A hot-rolled steel sheet may be obtained by finish-rolling the reheated steel slab at 800-950°C. When the finish-rolling temperature is less than 800°C, two phase region rolling may be performed, such that ferrite may be formed in the steel sheet surface layer, and it may be difficult to control the sheet shape. When the finish-rolling temperature exceeds 950°C, hot-rolled grain may be coarsened.

Coiling

After finish-rolling, the hot-rolled steel sheet may be coiled at 500-700°C and may be cooled, thereby manufacturing a hot-rolled coil. When the coiling temperature is less than 500°C, martensite may be formed entirely or partially in the steel sheet, such that it may be difficult to control the shape of the coil, and strength of the hot-rolled steel sheet may excessively increase, which may cause a decrease in cold-rollability. When the coiling temperature exceeds 700°C, coarse carbides may be excessively formed and cracks may be facilitated when stress occurs in the hot forming part, which may lead to a decrease in collision resistance.

Pickling

A coiled hot-rolled steel sheet may be pickled such that the product of acid concentration and pickling time may be 800-10,000g/L*s. As a steel sheet having gone through the reheating, finish-rolling and coiling processes, when the group 1 elements are added, the concentrated region may be formed in the plating layer, and in the pickling process, when the product of acid concentration and pickling time is applied within the range of 800-10,000g/L*s, by effectively promoting the formation of the aforementioned concentrated region, the effect of reducing the amount of diffusible hydrogen in steel may be obtained.

Specifically, when the product of acid concentration and pickling time is less than 800g/L*s, scale generated during finish-rolling may not be sufficiently removed, which may cause quality problems in the product. When the product of acid concentration and pickling time exceeds 10,000g/L*s, the entirety or a portion of the concentrated region may be lost during pickling and the expected effect may not be obtained. Also, since manufacturing costs may increase, an upper limit thereof may be determined to be 10,000g/L*s. When there is more than one pickling tank and the acid concentration and pickling time are different accordingly, the above value may be represented by adding the product of the acid concentration and pickling time for each tank.

According to an aspect of the present disclosure, acids generally used in the relevant technique may be used in the pickling process. Representative examples may include hydrochloric acid (HCl) and sulfuric acid ($H_2SO_4$). In particular, in the present disclosure, hydrochloric acid (HCl) may be used since pickling ability may be higher and economical processing costs may be economical as compared to using other acids, and foreign substances may be less likely to be formed on a surface after pickling, such that it may be easily to assure surface quality.

Meanwhile, although not limited to any particular example, and according to an aspect of the present disclosure, the concentration of the acid may range from 40-500 g/L. When the acid concentration is less than 40g/L, the surface scale generated during hot-rolling may not be sufficiently removed during the limited pickling time, and defects may occur on the surface of the steel sheet. When the acid concentration exceeds 500 g/L, it may be difficult to obtain the desired effect of the present disclosure in the final hot press-formed part due to loss of the concentrated region, and surface layer defects may occur due to overpickling.

Also, although not limited to any particular example, and according to an aspect of the present disclosure, the pickling time may be 5-60 seconds (s). When the pickling time is less than 5 seconds, the surface scale of the steel sheet may not be sufficiently removed, which may cause defects on the surface. When the pickling time is more than 60 seconds, productivity may be reduced due to loss of the concentrated region, which may cause processing costs.

Also, although not limited to any particular example, and according to an aspect of the present disclosure, the pickling temperature may be 40-120°C, and more preferably 50-100°C. When the pickling temperature is less than 40°C, the pickling power may not be sufficient and there may be a negative impact on product quality. When the pickling temperature exceeds 120°C, the fixed cost may increase to maintain the high temperature, and also the amount of vaporization of the pickling liquid may increase due to the high temperature, which may increase the cost to replenish the lost pickling liquid.

Continuous annealing

The pickled steel sheet may go through continuous annealing by controlling the average temperature increase rate for each zone to satisfy equations 1 to 3 as below.

$$1.5°C/s \leq \text{average temperature increase rate in zone 1 (°C/s)} \leq 10.0°C/s \qquad \text{[Equation 1]}$$

$$0.5°C/s \leq \text{average temperature increase rate in zone 2 (°C/s)} \leq 1.0°C/s \qquad \text{[Equation 2]}$$

$$0.01°C/s \leq \text{average temperature increase rate in zone 3 (°C/s)} \leq 0.4°C/s. \qquad \text{[Equation 3]}$$

(in equation 1, zone 1 refers to a section until a surface temperature of the steel sheet reaches 500°C, zone 2 refers to a section until a surface temperature of the steel sheet reaches 500°C to 700°C, and zone 3 refers to a section until a surface temperature of the steel sheet reaches a maximum temperature.)

In the present disclosure, by performing continuous annealing such that the average temperature increase rate of each zone satisfies equations 1 to 3 during the continuous annealing, the added group 1 elements may be effectively diffused into the plating layer region in contact with the base steel sheet, and accordingly, the concentrated region of group 1 elements may be effectively formed and facilitated.

During the continuous annealing described above, each zone may be divided based on the surface temperature of the steel sheet. The section from the starting point (room temperature) to the temperature at which the surface temperature of the steel sheet reaches 500°C may be defined as zone 1. Thereafter, the temperature section in which the surface temperature of the steel sheet ranges from 500°C to 700°C may be defined as zone 2. Also, the temperature section from the surface temperature of the steel sheet to 700°C to the maximum annealing target temperature of the steel sheet may be defined as zone 3. In other words, as the condition from the starting point to the annealing temperature up to the maximum annealing target temperature satisfies equations 1 to 3, group 1 elements, additional elements for concentration, may be sufficiently concentrated on the surface layer, and accordingly, excellent hydrogen embrittlement resistance may be assured after heat-treatment for hot forming. Specifically, as the average temperature increase rate in zone 1 rises rapidly, the time maintained at high temperature may be more assured, and the concentration element may be a high diffusivity to the plating layer region in contact with the base steel sheet at high temperature, such that surface-concentration elements in the hot press part may be sufficiently formed after annealing. In this case, it may be note that the zones 1 to 3 may be provided in order in the direction of transport of the steel sheet.

Meanwhile, as for the average temperature increase rate in each zone, the surface temperature of the steel sheet may be measured through the non-contact heat-treatment temperature in the middle or on the end of each zone. By inverting the steel sheet surface temperature for each measurement position and the passing time according to line speed, the average temperature increase rate in each zone may be calculated.

Plating

Plating may be performed by immersing the continuously annealed steel sheet in a plating bath formed of aluminum or aluminum alloy. In this case, the plating bath may be an aluminum plating bath or an aluminum-based plating bath, and may be an Al-Si plating bath, for example. Specifically, after annealing, by passing the hot-rolled steel sheet through a plating bath formed of aluminum or aluminum alloy, a plating steel sheet may be manufactured. In this case, any plating condition generally applied to steel sheets for hot press-forming may be applied without limitation in the present disclosure, but as an example, the composition of the plating bath may comprise Si: 6-12%, Fe: 4% or lower (including 0%), and a balance of Fe and inevitable impurities.

In this case, although not particularly limited, the plating amount in the plating process may generally be 20-140g/m$^2$ based on a single side manufactured. When the plating amount is less than 20g/m$^2$ on a single side, it may be difficult to assure the corrosion resistance of the desired hot forming part, and when the amount exceeds 140g/m$^2$, the manufacturing cost may increase due to excessive plating coating amount, and also it may not be easy to uniformly plate in the plating amount in the direction of the entire width and length of the coil.

Cold-rolling

According to an aspect of the present disclosure, optionally, after the pickling process, manufacturing a cold-rolled steel sheet by cold-rolling the hot-rolled steel sheet may be further included.

Hot press-forming

A method of manufacturing a final part having excellent hydrogen embrittlement resistance and collision resistance through hot forming and die quenching using a plating steel sheet manufactured by the above-described method may be described. A blank for hot forming may be manufactured using a plating steel sheet manufactured according to the steel composition and manufacturing method. The blank may be heated within a temperature range at the austenite single phase region temperature or higher, more specifically, Ac3 temperature or higher and 975°C or lower. In this case, when the heating temperature is below the Ac3 temperature, it may be difficult to assure strength and collision resistance due to the presence of non-transformed ferrite along the two phase region section. When the heating temperature exceeds 975°C, excessive oxides may be formed on the part surface, such that it may be difficult to assure point-weldability and manufacturing costs for maintaining high temperature may increase. Meanwhile, generally known definition in the relevant technique field may be applied to the Ac3 temperature.

Thereafter, it may be preferable to maintain the heated blank in the temperature range for 1-1000 seconds. When the holding time is less than 1 second, it may be difficult to obtain uniform temperature distribution across the entire blank temperature, which may cause material deviation in each position. When the holding time exceeds 1000 seconds, it may be difficult to assure weldability due to the excessive formation of oxide on the part surface, such as when the heating temperature is exceeded, and manufacturing costs of the part may increase.

Meanwhile, although not limited to any particular example, and according to an aspect of the present disclosure, the heated blank may be transferred to a press and hot forming and die quenching may be performed at a cooling rate of -20°C or higher. In this case, at cooling rates below - 20°C, a ferrite phase may be formed during cooling and may be created at a grain boundary, which may deteriorate strength and collision resistance. There is no particular limitation on the transfer of the blank, hot press-forming and cooling process, and the generally used hot press-forming method may be applied.

Also, in the description below, the [hot press-formed part] according to another aspect of the present disclosure may be described in detail.

The present inventors found out that reducing the amount of diffusible hydrogen absorbed during heat-treatment of hot press-forming may suppress defects due to hydrogen delayed fracture. Specifically, in hot press-forming, during the process of heating a blank having a plating layer formed of aluminum or aluminum alloy, water vapor present within the heat-treatment furnace may be adsorbed on the blank surface. Thereafter, hydrogen generated as water dissociates may be absorbed into steel while an austenite phase, which has high hydrogen solubility at high temperature, is formed. However, when rapid cooling occurs due to hot press-forming and the phase changes to the martensite phase, solubility of hydrogen may decrease rapidly, and the alloy plating layer formed when the plating layer is alloyed may act as an obstacle preventing hydrogen from being released.

Accordingly, a significant amount of diffusible hydrogen content remains in the steel, and accordingly, the possibility of cracks due to hydrogen delayed fracture may increase. In this respect, reducing the amount of diffusible hydrogen absorbed during heat-treatment may be an important factor in suppressing defects.

The present inventors found out and confirmed that, by forming various concentrated layers on the base iron surface, Kirkendall voids may be formed within the plating layer above a predetermined level. The Kirkendall void created as above may trap hydrogen permeating into the steel during hot press-forming, may effectively block diffusible hydrogen diffusing in the steel and may reducing the content thereof, and consequently, it was assumed that the effect of improving hydrogen embrittlement resistance may be expected.

Also, to assure hydrogen embrittlement resistance, the inventors found out that the amount of diffusible hydrogen in the hot forming part may need to meet a level of 0.25 ppm or less to ensure excellent hydrogen embrittlement resistance, which may be because cracks may not be created in a part having diffusible hydrogen in an amount of 0.25 ppm or less even when the sample is stressed by bending by applying stress of the same yield strength for 120 hours.

According to an aspect of the present disclosure, a hot press-formed part may include a base steel sheet, and may include a plating layer provided on at least one surface of the base steel sheet.

First, the alloy composition of the example base steel sheet of the present disclosure will be described below, but the alloy composition of the base steel sheet is not specifically limited. It should be noted that, when the content of each element is represented in weight% in the present disclosure, unless otherwise indicated.

Carbon (C): 0.02-0.5weight%

C may increase strength of the heat-treatment part and may improve hardenability, and may be added as an essential element to control strength control in an appropriate content. When the C content is less than 0.02%, hardenability may be low such that it may be difficult to assure sufficient strength, and it may be difficult to apply to a hot press part. Thus, C may be added in an amount of 0.02% or higher. Also, when the content thereof exceeds 0.5%, strength may increase excessively, which may cause brittleness and may deteriorate weldability. Thus, an upper limit thereof may be preferably 0.5% or lower.

Silicon (Si): 0.001-2weight%

Si may need to be added as a deoxidizer in steelmaking, and may be effective to obtain a uniform internal structure as a solid-solution strengthening element and carbide formation suppressing element, and may also be added as an element for contributing to increasing strength of the hot press-formed part and effective in material uniformity. When the content is less than 0.001%, the above effect may not be expected, and processing costs for controlling the Si content may be excessive. When the Si content exceeds 2%, excessive Si oxide may be created on the steel sheet surface during annealing such that coatability may be greatly degraded, and thus, Si may be added in an amount of 2% or lower.

Manganese (Mn): 0.1-4 weight%

Mn may need to be added to ensure desired strength due to the solid-solution strengthening effect, and also to suppress ferrite formation during hot press-forming by improving hardenability. When the Mn content is less than 0.1%, it may be difficult to obtain the sufficient hardenability effect, and it may be necessary to excessively add other expensive alloy elements for insufficient hardenability, which may significantly increase manufacturing costs. Also, when the Mn content exceeds 4%, a banded structure arranged in the microstructure in a rolling direction may increase, which may cause nonuniformity of an internal structure and may degrade collision resistance, and thus, Mn may be added in an amount of 4% or lower.

Phosphorus (P): 0.05 weight% or lower (excluding 0%)

P may be present as an impurity in steel, and when the maximum content thereof exceeds 0.05%, material properties may be deteriorated due to weldability of a hot forming part and high temperature grain boundary segregation. Thus, an upper limit thereof may be 0.05%. However, considering that P may be inevitably included as impurities, a lower limit of the P content may be 0%, or 0.5 ppm, excluding 0%.

Sulfur (S): 0.02 weight% or lower (excluding 0%)

S may be an impurity, and may inhibit ductility, impact properties and weldability of the part, and thus, the maximum content thereof may be limited to 0.02%. However, considering that S may be inevitably included as an impurity, a lower limit of the S content may be 1 ppm, excluding 0%.

Aluminum (Al): 0.001-1 weight%

Al, along with Si, may act as a deoxidizer in steelmaking and may increase cleanliness of steel. When the Al content is less than 0.001%, it may be difficult to obtain the above effect, and the manufacturing process cost for controlling the Al content may be excessive, which may be unpreferable. Also, when the content thereof exceeds 1%, high-temperature ductility due to excessive AlN precipitate formed during a continuous casting process may decrease, and slab cracks may be formed, which may cause manufacturing problems, and thus, an upper limit thereof may be determined to be 1%.

Nitrogen (N): 0.02 weight% or lower (excluding 0%)

N may be included as an impurity in steel. When the N content exceeds 0.02%, it may be likely that slab cracks may be formed due to AlN formation together with added Al, and thus, an upper limit thereof may be determined to be 0.02%. However, considering that N may be inevitably included as an impurity, a lower limit of the N content may be 1 ppm, excluding 0%.

Titanium (Ti): 0.1% or lower (including 0%)

Ti may combine with nitrogen remaining as impurities in steel and may create TiN, such that TI may protect B from becoming a compound to ensure hardenability. Accordingly, Ti may be added selectively to assure the above effect, and through the formation of Tie precipitate by the addition of Ti, the effect of precipitation strengthening and grain refinement may be expected. When the content exceeds 0.1%, a large amount of coarse TiN may be formed and a steel material may deteriorate, such that an upper limit thereof may be determined to be 0.1%.

Boron (B): 0.0001-0.01%

B may effectively improve hardenability, and may be segregated at a grain boundary of prior austenite and may suppress brittleness of the hot forming part due to segregation of impurities P or/and S at the grain boundary. To control the content of B to less than 0.0001%, excessive processing costs may be necessary, which may not be preferable. Also, when the content thereof exceeds 0.01%, a $Fe_{23}CB_6$ compound may be formed such that brittleness may be caused in hot-rolling, and thus, an upper limit thereof may be determined to be 0.01%.

Molybdenum (Mo): 1.00% or lower (including 0%)

Mo may effectively improve hardenability and may be selectively included, and an upper limit of the added amount thereof may be 1.00% to prevent the problem of excessive manufacturing costs.

Vanadium (V): 1.00% or lower (including 0%)

V may improve hydrogen embrittlement resistance by forming carbide and reducing a grain boundary, and may be optionally included. To prevent the problem of excessive manufacturing costs, an upper limit of the added amount thereof may be 1.00%.

Calcium (Ca): 0.01% or lower (including 0%)

Ca may be selectively included as an element to improve steel cleanliness by removing P and S to a predetermined level during steelmaking, and an upper limit of the added amount thereof may be 0.01% to prevent the problem of excessive manufacturing costs.

Neobium (Nb): 0.1% or lower (including 0%)

Nb may improve hydrogen embrittlement resistance by forming carbide and reducing grain boundaries, and may be selectively included. To prevent the problem of excessive manufacturing costs, an upper limit of the added amount thereof may be 0.1%.

Tungsten (W): 1% or lower (including 0%)

W may improve hydrogen embrittlement resistance by forming carbide and allowing a grain boundary to be fine, and may be optionally included. To prevent the problem of excessive manufacturing costs, an upper limit of the added amount thereof may be 1%.

Rare earth metals (REM): 0.3% or lower (including 0%)

Rare earth metals (REM) may be included during steelmaking, and may be optionally included. When the content thereof exceeds 0.3%, REM may be excessively segregated at a grain boundary and hydrogen embrittlement resistance may be deteriorated. Accordingly, the content of REM may be 0.3% or lower.

Group 1 elements: 0.005-1weight%

The base steel sheet may further include 0.005 weight%-1 weight% of one or more of group 1 elements selected from a group consisting of Sb, Sn, As, Bi, Cu and Ni independently.

When the group 1 elements are added, in a plating layer of a hot press-formed part, a region in which a concentration of the group 1 elements is concentrated in a surface region from an interface between the base steel sheet and the plating layer toward the plating layer may be present. As the concentrated region of the group 1 elements is formed, diffusivity of aluminum (Al) and iron (Fe) diffusing mutually during high-temperature heat-treatment may become non-uniform, such that formation of Kirkendall voids in the plating layer may be facilitated after hot press-forming. Accordingly, when the content of each group 1 element is less than 0.005%, the concentrated layer may not be sufficiently formed and the formation of the Kirkendall void described above does not occur sufficiently, such that it may be difficult to expect an improvement in hydrogen embrittlement resistance. When the content of each group 1 element exceeds 1%, the cost of alloy iron may increase, and voids in the plating layer may be excessively formed, such that, due to peeling of plating due to stress applied during hot forming, deterioration of corrosion resistance may occur.

Meanwhile, according to an aspect of the present disclosure, to further improve the aforementioned effect, among the group 1 elements, one or more elements selected from a group consisting of Sb, Sn, As and Bi may be added in an amount of 0.005-0.1% independently.

Also, according to an aspect of the present disclosure, to further improve the aforementioned effect, among the group 1 elements, one or more elements selected from a group consisting of Cu and Ni may be included by 0.05-1% independently.

A remainder other than the above-the elements may be iron (Fe), and as long as the element may be included in the steel sheet for hot press-forming, there may be no particular limitations on the addition thereof. Also, in a general manufacturing process, inevitable impurities may be inevitably added from raw materials or an ambient environment, and thus, impurities may not be excluded. A person skilled in the art of a general manufacturing process may be aware of the impurities, and thus, the descriptions of the impurities may not be provided in the present disclosure.

In the present disclosure, the type of the plating layer is not particularly limited, and any plating layer applied to a general plating steel sheet for hot forming may be applied to the present disclosure without limitations.

As an example, the plating layer may be an aluminum or aluminum alloy plating layer, and preferably, the plating layer may include Si: 6-12%, Fe: 4% or lower (including 0%), and a balance of Fe and inevitable impurities.

Alternatively, as another example, in the case of a molten plating layer, a molten aluminum plating layer, molten Al-Si plating layer, molten Al-Si-Mg plating layer, molten Al-Zn plating layer, or molten Al-Mg plating layer may be applied. Examples of the alloyed molten plating layer may include an alloyed molten aluminum plating layer, alloyed molten Al-Si plating layer, alloyed molten Al-Si-Mg plating layer, alloyed molten Al-Zn plating layer, and alloyed molten Al-Mg plating layer. The plating layer may include at least one of Mn, Cr, Cu, Mo, Ni, Sb, Sn, Ti, Ca, Sr, Mg, Be, Li, and Na. The coating amount of the plating layer is not particularly limited, and may be, for example, a coating amount within a general range.

Meanwhile, the hot press-formed part may satisfy relational expression 2-1 as below.

[Relational expression 2-1]

$$9.5 \leq D_{B2}/D_{A2} \leq 11.0$$

(In the relational expression 2-1, $D_{B2}$ indicates an absolute value of $D_{Fe}/D_{Al}$ in a region in which an atomic content ratio of aluminum (Al) in the hot press-formed part is 0.25-0.45, $D_{A2}$ indicates an absolute value of $D_{Fe}/D_{Al}$ in a region in which an atomic content ratio of aluminum (Al) in the hot press-formed part is 0.25-0.45, and in this case, $D_{Fe}$ indicates diffusivity of iron (Fe), and $D_{Al}$ indicates diffusivity of aluminum (Al).

Meanwhile, a diffusivity for each of iron (Fe) and aluminum (Al) in a region in which an atomic content ratio of aluminum (Al) in the hot press-formed part corresponds to 0.25-0.45, or a region in which the atomic content ratio of aluminum (Al) in the hot press-formed part corresponds to 0.01-0.2 may be calculated through a common method known in the relevant technique using relational expression A as below, which may thus not be limited to any particular example in the present disclosure.

[Relational expression A]

$$\ln C = A - \frac{x^2}{4 \times D \times t}$$

(in relational expression A, C indicates the atomic content ratio for each element among iron (Fe) and aluminum (Al), A is a constant, x indicates the depth (cm) in the thickness direction in a specific position from the plating layer surface, D indicates diffusivity ($cm^2/s$), and t may indicate time (s))

Specifically, a normal relational expression to calculate diffusivity (corresponding to 'D' in the relational expressions below), such as relational expression A, may be used, a slope ($-1/4 \times D \times t$) when plotting the graph of lnC vs. $x^2$ within the same time (that is, under the same t conditions) may be calculated, and diffusivity(D) may be obtained from the slope value.

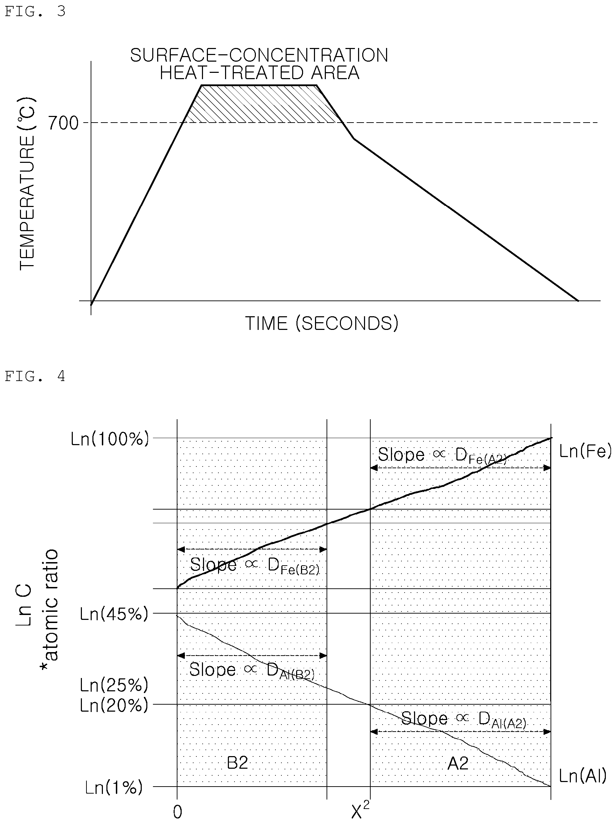

An example of the graph of lnC vs. $x^2$ is illustrated in FIG. 4. The detailed method for measuring diffusivity may be as below. First, using glow discharge spectroscopy (GDS), the change profile of content of aluminum (Al) and iron (Fe) in a hot press-formed part may be measured. In this case, the portion illustrated as 'A2' in FIG. 4 may indicate a region in which the atomic content ratio of aluminum (Al) is 0.01-0.2 (that is, a region in which the atomic % content of Al is 1-20%).

Also, the portion illustrated as 'B2' in FIG. 4 may indicate a region in which the atomic content ratio of aluminum (Al) is 0.25-0.45 (that is, a region in which the atomic % content of Al is 25-45%).

In other words, after measuring the change profile of content for each element of Al and Fe, the slope was measured by plotting the Al and Fe content graph of lnC vs. x2 in each portion A2 and 2 in FIG. 4, From the slope, the diffusivity for each element of Al and Fe in the A2 portion may be obtained, and the diffusivity for each element of Al and Fe in the B2 portion may be obtained. From this, by calculating $D_{B2}$, which is the absolute value of $D_{Fe}/D_{Al}$ in the B2 portion, and $D_{A2}$, which is the absolute value of $D_{Fe}/D_{Al}$ $\underline{\circ}|$ in the A2 portion, $D_{B2}/D_{A2}$, which is the value of the relational expression 2-1, may be obtained. When the value of $D_{B2}/D_{A2}$ defined from the relational expression 2-1 is less than 9.5, Kirkendall voids may not be created above a predetermined level, such that it may be difficult to effectively trap permeating hydrogen during hot press-forming, which may cause an increase in the amount of diffusible hydrogen and hydrogen embrittlement resistance of the part may deteriorate, which may be problematic. When the value of $D_{B2}/D_{A2}$ defined from the relational expression 2-1 exceeds 11.0, excessive Kirkendall voids may be formed, and peeling of plating may occur due to the stress applied during hot press-forming, such that corrosion resistance may deteriorate.

In this specification, $D_{B2}$ and $D_{A2}$ may refer to a diffusivity in which Al and Fe diffuse mutually in each phase between heat-treatments. As the value of $D_{B2}/D_{A2}$ increases, unevenness of Fe/Al diffusivity within the B2 and A2 portion may occur, which may facilitate the creation of Kirkendall voids in the interface between the B2 and A2 portions.

Although not limited to any particular example, and according to an embodiment of the present disclosure, in the hot press-formed part, a microstructure of the base steel sheet may comprise one or more selected from a group consisting of martensite and bainite, or may comprise one or more selected from a group consisting of martensite and bainite.

Although not limited to any particular example, and according to an embodiment of the present disclosure, in the hot press-formed part, the average number per unit area of Kirkendall voids having a diameter of 0.5 $\mu$m-5 $\mu$m present in a region within 20 $\mu$m from the interface between the base steel sheet and the plating layer may satisfy 7/1000 $\mu$m$^2$-100/1000 $\mu$m$^2$.

A Kirkendall void may be formed from the interfacce between the base iron and the plating layer created due to the addition of the group 1 elements and impurities toward the plating layer. Among the Kirkendall voids formed as above, the Kirkendall voids having a predetermined size (that is, having a diameter of 0.5 $\mu$m-5 $\mu$m) formed in a region within 20 $\mu$m (in the direction of the plating layer) from the interface between the base iron and the plating layer may reduce the amount of diffusible hydrogen permeating into steel during hot press-forming, such that hydrogen brittleness occurring in the part after hot forming may be prevented. In other words, a Kirkendall void having a diameter of less than 0.5 $\mu$m may not effectively trap hydrogen absorbed during heat-treatment for hot press-forming, such that the effect of improving hydrogen embrittlement resistance may be minimal. Also, Kirkendall voids having a diameter greater than 5 $\mu$m may act as defects, which may cause peeling of plating and paint corrosion resistance may deteriorate due to partial peeling of plating during hot forming.

Accordingly, the present inventors conducted extensive research and found out that, by determining the average number of Kirkendall voids having a predetermined size per unit area to be within an appropriate range, excellent hydrogen embrittlement resistance and paint corrosion resistance may be assured. Specifically, when the average number of the Kirkendall voids per unit area is less than 8/1000 $\mu$m$^2$, permeating diffusible hydrogen may not be sufficiently blocked, such that the part may become vulnerable to hydrogen brittleness. When the average number exceeds 100/1000 $\mu$m$^2$, peeling of plating may occur due to stress applied during hot press-forming, such that corrosion resistance of the part may deteriorate.

According to an aspect of the present disclosure, to further improve the above effect, a lower limit of the average number per unit area of the Kirkendall voids may be 10/1000 $\mu$m$^2$, or 18/1000 $\mu$m$^2$.

According to an aspect of the present disclosure, to further improve the above effect, an upper limit thereof of the average number per unit area of the Kirkendall voids may be 95/1000 $\mu$m$^2$, or 92/1000 $\mu$m$^2$.

Meanwhile, since descriptions known in the relevant technique field may be applicable to the Kirkendall void, the Kirkendall void may not be separately defined in this specification.

In this specification, although the method of measuring the average number of the Kirkendall voids per unit area is not limited to any particular example, and as an example, the average number may be measured by observing a cross-section of the structure (e.g., collecting a sample in a direction perpendicular to the rolling direction) using a scanning electron microscope (SEM).

In this case, the interface between the base steel sheet and the plating layer may be distinct by a difference in contrast through SEM/OM observation, or may also be distinct by component analysis through SEM-EDS, or EPMA. In other words, when measuring through the base steel sheet-plating layer through a line profile, the interface between the base steel sheet and the plating layer may be determined as the point at which the Al content is 2 weight%, and when the content exceeds 2%, the region may be classified as a plating layer, and when the content is 2% or lower, the region may be classified as base iron.

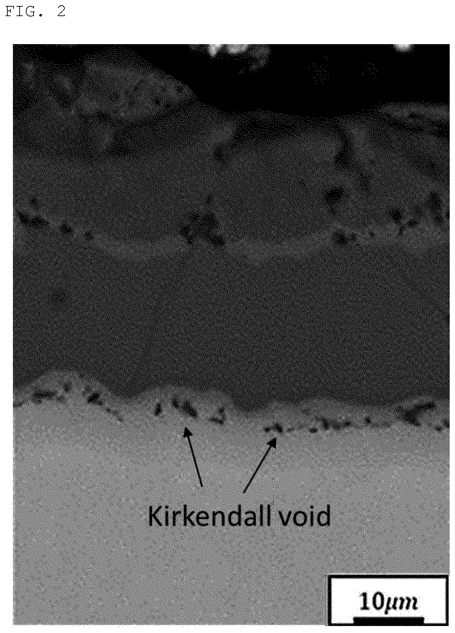

Meanwhile, when a parallel line is drawn 20 $\mu$m away from the interface line of the interface separating the base steel sheet and the plating layer, as illustrated in FIG. 2, the portion having black contrast present in a region within 20 $\mu$m from the interface may be identified as a Kirkendall void.

Also, in this specification, the diameter of the Kirkendall void may refer to an equivalent circular diameter when assuming an ideal circle having the same area for each Kirkendall void.

Also, the method of measuring the average number per unit area of the Kirkendall void may not be limited to any particular example, and the average number may be measured using a general method. For example, a plurality of samples (e.g., 3) having a 1000 $\mu$m$^2$ area may be collected, the number of Kirkendall voids completely included within the 1000 $\mu$m$^2$ area of each sample may be measured, and an average thereof may be calculated, thereby measuring an average number of the aforementioned Kirkendall void per unit area. However, since the number of the plurality of samples may be two or more, which may be sufficient, the number is not limited to any particular example.

Although not limited to any particular example, and according to an embodiment of the present disclosure, in the hot press-formed part, the base steel sheet may further include one or more group 1 elements selected from a group consisting of Sn, As, Bi, Cu and Ni (i.e., corresponding to X in the relational expression 2-2 below), and the hot press-formed part may satisfy relational expression 2-2 as below.

[Relational expression 2-2]

$$\frac{X_{\max}}{X_{coat}} \geq 1.5$$

(in relational expression 2-2, $X_{coat}$ indicates an average X content in the plating layer, $X_{max}$ indicates a maximum value of an X content in the plating layer, and X indicates one or more group 1 elements selected from a group consisting of Sb, Sn, As, Bi, Cu and Ni.)

$X_{coat}$ and $X_{max}$ may be units representing content, and when calculating relational expression 2-2, the units may be unified, such that the unit is not limited to any particular example, and, as an example, the unit may be weight%. The method of measuring the $X_{coat}$ and $X_{max}$ is also not limited to any particular example.

However, as an example, the contents may be measured by analyzing the change in content of group 1 elements in the thickness direction of the base steel sheet from any point on the plating layer surface using glow discharge optical emission spectrometry (GDS). In this case, it should be note that each group 1 element may individually satisfy the value of the relational expression 2-2.

$X_{coat}$, which is the average X content within the plating layer, may be measured by calculating the average value of the X contents at each point when the region from the plating layer surface to the interface between the base steel sheet and plating layer is divided by the same distance in the thickness direction (e.g., in the direction perpendicular to the rolling direction) in the GDS profile. In this case, the interface between the base steel sheet and the plating layer may be determined as the point at which the Al content is 2 weight% on the GDS profile.

According to an embodiment of the present disclosure, when the hot press-formed part does not satisfy relational expression 2-2, a difference in Fe and Al diffusion gradients during hot forming may not be sufficiently created, such that it may be difficult to sufficiently promote the formation of Kirkendall voids within the plating layer. Accordingly, as it may be difficult to obtain the effect of reducing the amount of diffusible hydrogen in steel, it may be difficult to expect assurance of the effect of the present disclosure.

Next, the [method of manufacturing a hot press-formed part] according to another aspect of the present disclosure may be described.

Reheating slab

First, the steel slab may be reheated at 1050-1300°C. When the reheating temperature is less than 1050°C, the slab structure may not be sufficiently homogenized, such that, when using precipitated elements, it is less likely that solid-solution may occur again. When the reheating temperature exceeds 1300°C, an excessive oxidation layer may be formed, which may increase manufacturing costs for removing the oxidation layer and may increase the possibility of surface defects after finish-rolling.

Finish-rolling

A hot-rolled steel sheet may be obtained by finish-rolling the reheated steel slab at 800-950°C. When the finish-rolling temperature is less than 800°C, two phase region rolling may be performed, such that ferrite may be formed in the steel sheet surface layer, and it may be difficult to control the sheet shape. When the finish-rolling temperature exceeds 950°C, hot-rolled grain may be coarsened.

Coiling

After finish-rolling, the hot-rolled steel sheet may be coiled at 500-700°C and may be cooled, thereby manufacturing a hot-rolled coil. When the coiling temperature is less than 500°C, martensite may be formed entirely or partially in the steel sheet, such that it may be difficult to control the shape of the coil, and strength of the hot-rolled steel sheet may excessively increase, which may cause a decrease in cold-rollability. When the coiling temperature exceeds 700°C, coarse carbide may be excessively formed and cracks may be facilitated when stress occurs in the hot forming part, which may lead to a decrease in collision resistance.

Picking

A coiled hot-rolled steel sheet may be pickled such that the product of acid concentration and pickling time may be 800-10,000g/L*s. As a steel sheet having gone through the reheating, finish-rolling and coiling processes, when the group 1 elements are added, the concentrated region may be formed in the plating layer, and in the pickling process, when the product of acid concentration and pickling time is applied within the range of 800-10,000g/L*s, by effectively promoting the formation of the aforementioned concentrated region, the effect of reducing the amount of diffusible hydrogen in steel may be obtained.

Specifically, when the product of acid concentration and pickling time is less than 800g/L*s, scale generated during finish-rolling may not be sufficiently removed, which may cause quality problems in the product. When the product of acid concentration and pickling time exceeds 10,000g/L*s, the entirety or a portion of the concentrated region may be lost during pickling and the expected effect may not be obtained. Also, since manufacturing costs may increase, an upper limit thereof may be determined to be 10,000g/L*s. When there is more than one pickling tank and the acid concentration and pickling time are different accordingly, the above value may be represented by adding the product of the acid concentration and pickling time for each tank.

According to an aspect of the present disclosure, acids generally used in the relevant technique may be used in the pickling process. Representative examples may include hydrochloric acid (HCl) and sulfuric acid ($H_2SO_4$). In particular, in the present disclosure, hydrochloric acid (HCl) may be used since pickling ability may be higher and economical processing costs may be economical as compared to using other acids, and foreign substances may be less likely to be formed on a surface after pickling, such that it may be easily to assure surface quality.

Meanwhile, although not limited to any particular example, and according to an aspect of the present disclosure, the concentration of the acid may range from 40-500 g/L. When the acid concentration is less than 40g/L, the surface scale generated during hot-rolling may not be sufficiently removed during the limited pickling time, and defects may occur on the surface of the steel sheet. When the acid concentration exceeds 500 g/L, it may be difficult to obtain the desired effect of the present disclosure in the final hot press-formed part due to loss of the concentrated region, and surface layer defects may occur due to overpickling.

Also, although not limited to any particular example, and according to an aspect of the present disclosure, the pickling time may be 5-60 seconds (s). When the pickling time is less than 5 seconds, the surface scale of the steel sheet may not be sufficiently removed, which may cause defects on the surface. When the pickling time is more than 60 seconds, productivity may be reduced due to loss of the concentrated region, which may cause processing costs.

Also, although not limited to any particular example, and according to an aspect of the present disclosure, the pickling temperature may be 40-120°C, and more preferably 50-100°C. When the pickling temperature is less than 40°C, the pickling power may not be sufficient and there may be a negative impact on product quality. When the pickling temperature exceeds 120°C, the fixed cost may increase to maintain the high temperature, and also the amount of vaporization of the pickling liquid may increase due to the high temperature, which may increase the cost to replenish the lost pickling liquid.

Continuous annealing

The pickled steel sheet may go through continuous annealing by controlling the average temperature increase rate for each zone to satisfy equations 1 to 3 as below.

$$1.5°C/s \leq \text{average temperature increase rate in zone 1 (°C/s)} \leq 10.0°C/s \qquad \text{[Equation 1]}$$

$$0.5°C/s \leq \text{average temperature increase rate in zone 2 (°C/s)} \leq 1.0°C/s \qquad \text{[Equation 2]}$$

$$0.01°C/s \leq \text{average temperature increase rate in zone 3 (°C/s)} \leq 0.4°C/s. \qquad \text{[Equation 3]}$$

(in equation 1, zone 1 refers to a section until a surface temperature of the steel sheet reaches 500°C, zone 2 refers to a section until a surface temperature of the steel sheet reaches 500°C to 700°C, and zone 3 refers to a section until a surface temperature of the steel sheet reaches a maximum temperature.)

In the present disclosure, by performing continuous annealing such that the average temperature increase rate of each zone satisfies equations 1 to 3 during the continuous annealing, the added group 1 elements may be effectively diffused into the plating layer region in contact with the base steel sheet, and accordingly, the concentrated region of group 1 elements may be effectively formed and facilitated.

During the continuous annealing described above, each zone may be divided based on the surface temperature of the steel sheet. The section from the starting point (room temperature) to the temperature at which the surface temperature of the steel sheet reaches 500°C may be defined as zone 1. Thereafter, the temperature section in which the surface temperature of the steel sheet ranges from 500°C to 700°C may be defined as zone 2. Also, the temperature section from the surface temperature of the steel sheet to 700°C to the maximum annealing target temperature of the steel sheet may be defined as zone 3. In other words, as the condition from the starting point to the annealing temperature up to the maximum annealing target temperature satisfies equations 1 to 3, group 1 elements, additional elements for concentration, may be sufficiently concentrated on the surface layer, and accordingly, excellent hydrogen embrittlement resistance may be assured after heat-treatment for hot forming. Specifically, as the average temperature increase rate in zone 1 rises rapidly, the time maintained at high temperature may be more assured, and the concentration element may be a high diffusivity to the plating layer region in contact with the base steel sheet at high temperature, such that surface-concentration elements in the hot press part may be sufficiently formed after annealing. In this case, it may be note that the zones 1 to 3 may be provided in order in the direction of transport of the steel sheet.

Although not limited to any particular example, and as for the average temperature increase rate in each zone, the surface temperature of the steel sheet may be measured through the non-contact heat-treatment temperature in the middle or on an end of each zone. By inverting the steel sheet surface temperature for each measurement position and the passing time according to line speed, the average temperature increase rate in each zone may be calculated.

Meanwhile, during the continuous annealing, the heat-treatment area over time above 700°C may be controlled to satisfy 5,000°C·s-25,000°C·s.

In the present disclosure, the pickled steel sheet may need to go through heat-treatment in a continuous annealing process such that the maximum temperature of the steel sheet exceeds 700°C, and as illustrated in FIG. 3, the time-dependent heat-treatment area (i.e., corresponding to the "surface-concentration heat-treatment area" in FIG. 3) in sections of 700°C or higher may need to satisfy a range of 5,000°C·s or more and 25,000°C·s or less. Accordingly, the added group 1 elements may be effectively diffused into the plating layer region in contact with the base steel sheet, and accordingly, the concentrated region of group 1 elements may be effectively formed and facilitated.

When the time-dependent heat-treatment area (that is, surface-concentration heat-treatment area) is less than 5,000°C·s, the concentrated layer of added group 1 may not be sufficiently concentrated on the surface layer, such that the effects of the present disclosure, such as improving hydrogen embrittlement resistance, may not be implemented. When the area exceeds 25,000°C·s, processing costs and time for continuous annealing may increase, and coatability may deteriorate, which may cause uneven plating or incomplete plating may occur.

Plating

Plating may be performed by immersing the continuously annealed steel sheet in a plating bath formed of aluminum or aluminum alloy. In this case, the plating bath may be an aluminum plating bath or an aluminum-based plating bath, and may be an Al-Si plating bath, for example. Specifically, after annealing, by passing the hot-rolled steel sheet through a plating bath formed of aluminum or aluminum alloy, a plating steel sheet may be manufactured. In this case, any plating condition generally applied to steel sheets for hot press-forming may be applied without limitation in the present disclosure, but as an example, the composition of the plating bath may include Si: 6-12%, Fe: 4% or lower (including 0%), and a balance of Fe and inevitable impurities.

In this case, although not particularly limited, the plating amount in the plating process may generally be 20-140g/m$^2$ based on a single side manufactured. When the plating amount is less than 20g/m$^2$ on a single side, it may be difficult to assure the corrosion resistance of the desired hot forming part, and when the amount exceeds 140g/m$^2$, the manufacturing cost may increase due to excessive plating coating amount, and also it may not be easy to uniformly plate in the plating amount in the direction of the entire width and length of the coil.

Cold-rolling

According to an aspect of the present disclosure, optionally, after the pickling process, manufacturing a cold-rolled steel sheet by cold-rolling the hot-rolled steel sheet may be further included.

Hot press-forming

A method of manufacturing a final part having excellent hydrogen embrittlement resistance and collision resistance through hot forming and die quenching using a plating steel sheet manufactured by the above-described method may be described. A blank for hot forming may be manufactured using a plating steel sheet manufactured according to the steel composition and manufacturing method. The blank may be heated within a temperature range at the austenite single phase region temperature or higher, more specifically, Ac3 temperature or higher and 975°C or lower. In this case, when the heating temperature is below the Ac3 temperature, it may be difficult to assure strength and collision resistance due to the presence of non-transformed ferrite along the two phase region section. When the heating temperature exceeds 975°C, excessive oxides may be formed on the part surface, such that it may be difficult to assure point-weldability and manufacturing costs for maintaining high temperature may increase. Meanwhile, generally known definition in the relevant technique field may be applied to the Ac3 temperature, and the temperature may not be defined separately.

Thereafter, it may be preferable to maintain the heated blank in the temperature range for 1-1000 seconds. When the holding time is less than 1 second, it may be difficult to obtain uniform temperature distribution across the entire blank temperature, which may cause material deviation in each position. When the holding time exceeds 1000 seconds, it may be difficult to assure weldability due to the excessive formation of oxide on the part surface, such as when the heating temperature is exceeded, and manufacturing costs of the part may increase.

Meanwhile, although not limited to any particular example, and according to an aspect of the present disclosure, the heated blank may be transferred to a press and hot forming and die quenching may be performed at a cooling rate of -20°C or higher. In this case, at cooling rates below -20°C, a ferrite phase may be formed during cooling and may be created at a grain boundary, which may deteriorate strength and collision resistance. There is no particular limitation on the transfer of the blank, hot press-forming and cooling process, and the generally used hot press-forming method may be applied.

Mode for Invention

Hereinafter, the present disclosure may be described in more detail through embodiments. However, it should be noted that the embodiments described above are intended to illustrate and embody the present disclosure and are not intended to limit the scope of rights of the present disclosure, which may be because the scope of rights in the present disclosure is determined by the subject matters stated in the claims and matters reasonably inferred therefrom.

(Experimental example 1)

By weight%, a composition of 0.22% C - 0.2% Si - 1.2% Mn - 0.03% Al - 0.01% P - 0.002% S - 0.03% Ti - 0.004% N, and group 1 elements, additional elements are added as in Table 1, and a steel slab having a thickness of 40 mm was manufactured through vacuum melting.

The slab was maintained at 1200°C for 1 hour, hot-rolled to a hot-rolling end temperature of 900°C, and coiled to a coiling temperature of 600°C. Thereafter, cold-rolling including the pickling process was performed. Thereafter, pickling, continuous annealing and plating were performed sequentially on the cold-rolled steel sheet obtained by cold-rolling. In this case, the pickling condition within the scope of the present disclosure and the continuous annealing condition for each zone were applied. More specifically, the HCl concentration*pickling time was 4,000g/L*s (here, the process was performed with the HCl concentration of 200g/L and a pickling time of 20 seconds, and the pickling temperature was applied at 80°C), and as for the annealing conditions for each zone for annealing, equation (1): 3.0°C/s, equation (2): 0.5°C/s, and equation (3): 0.3°C/s was applied collectively.

Thereafter, plating was performed by immersing in a plating bath consisting of Al-9% Si-2%, and a balance of Fe and inevitable impurities. Also, in the embodiment, a temperature of 930°C and a heating time of 6 minutes were applied, a transfer time to the die of 10 seconds was applied, and hot forming and die quenching were applied.

To confirm whether the concentrated layer was sufficiently formed on the base layer surface in the sample manufactured as above, the content of group 1 elements listed in Table 1 was analyzed using glow discharge optical emission spectrometry (GDS) using GDS850A (model name, manufactured by LECO), DC and RF equipment.

Referring to the GDS analysis results, the weight% content of $X_{max}$ and $X_{coat}$ for each group 1 elements was measured, the ratio was calculated, and the results are listed in Table 1 below.

Also, to confirm Kirkendall voids within 20 $\mu$m in the plating layer direction within the plating layer, the cross-section of the structure (samples collected in the direction perpendicular to the rolling direction) was observed using scanning electron microscopy (SEM). Using the image observed as above, imaging was performed at a magnification of $\times$1000, and as indicated in FIG. 1 (measured on a hot press-formed part obtained from Embodiment 1), the portion having black contrast present within the range may be identified as a Kirkendall void. By applying this magnification, the sample was surrounded with a rectangle having a thickness of 20 $\mu$m $\times$ length of 50 $\mu$m, and the average number of Kirkendall voids identified within the range was measured and limited to number/1000 $\mu$m$^2$, and the results are listed in Table 1.

To evaluate the amount of diffusible hydrogen for materials with various Kirkendall voids, the measurement was performed using thermal desorption analysis (TDA) equipment (Bruker G8: model name). The conditions for analyzing the amount of diffusible hydrogen included increasing the temperature to 400°C at 20°C/min, maintaining the time sufficient for the diffusible hydrogen peak to appear, and the diffused hydrogen curve was measured. Also, the total amount of diffusible hydrogen in steel was obtained by integrating the curves, and the results are listed in Table 1.

Also, to understand the effect of the Kirkendall void in the plating layer on paint corrosion resistance, a scribe of w0.5×L50mm was formed, and a corrosion resistance test according to VDA233-102 standard was performed for 10 cycles. Thereafter, the peeling width of the corrosion area around the scribe was measured based on ISO4628-8 standards. In this case, when the measured peeling width satisfied 2.5 mm or less, the sample was marked "good," and when the width exceeded 2.5 mm, the sample was marked "defective" in Table 1 below.

[Table 1]

| No. | Element and content (weight%) | [Relational expression 1] $x_{max}/x_{coat}$ | Average number per unit area of Kirkendall voids (/1000 $\mu m^2$) | Amount of diffusible hydrogen (ppm) | Paint corrosion resistance | Notes |
|---|---|---|---|---|---|---|
| 1 | Sb: 0.01 | 1.52 | 13 | 0.16 | good | Embodiment 1 |
| 2 | Sb: 0.03 | 2.60 | 34 | 0.10 | good | Embodiment 2 |
| 3 | Sb: 0.09 | 7.28 | 89 | 0.05 | good | Embodiment 3 |
| 4 | Sb: 0.003 | 1.12 | 5 | 0.23 | good | Comparative example 1 |
| 5 | Sb: 0.13 | 10.31 | 119 | 0.02 | defective | Comparative example 2 |
| 6 | Sn: 0.01 | 1.60 | 12 | 0.18 | good | Embodiment 4 |
| 7 | Sn: 0.02 | 2.21 | 28 | 0.13 | good | Embodiment 5 |
| 8 | Sn: 0.09 | 9.89 | 91 | 0.06 | good | Embodiment 6 |
| 9 | Sn: 0.003 | 1.16 | 4 | 0.29 | good | Comparative example 3 |
| 10 | Sn: 0.11 | 11.05 | 120 | 0.04 | defective | Comparative example 4 |
| 11 | As: 0.01 | 1.55 | 15 | 0.19 | good | Embodiment 7 |
| 12 | As: 0.04 | 3.08 | 37 | 0.13 | good | Embodiment 8 |
| 13 | As: 0.09 | 10.21 | 92 | 0.07 | good | Embodiment 9 |
| 14 | As: 0.005 | 1.27 | 5 | 0.30 | good | Comparative example 5 |
| 15 | As: 0.12 | 11.55 | 138 | 0.03 | defective | Comparative example 6 |
| 16 | Bi: 0.01 | 1.67 | 13 | 0.16 | good | Embodiment 10 |
| 17 | Bi: 0.04 | 3.11 | 40 | 0.11 | good | Embodiment 11 |
| 18 | Bi: 0.09 | 9.87 | 77 | 0.07 | good | Embodiment 12 |
| 19 | Bi: 0.003 | 1.20 | 6 | 0.26 | good | Comparative example 7 |
| 20 | Bi: 0.12 | 11.30 | 137 | 0.03 | defective | Comparative example 8 |
| 21 | Cu: 0.1 | 1.58 | 15 | 0.16 | good | Embodiment 13 |
| 22 | Cu: 0.3 | 3.01 | 37 | 0.09 | good | Embodiment 14 |
| 23 | Cu: 0.8 | 8.97 | 79 | 0.06 | good | Embodiment 15 |
| 24 | Cu: 0.04 | 1.15 | 5 | 0.21 | good | Comparative example 9 |
| 25 | Cu: 1.1 | 12.51 | 118 | 0.03 | defective | Comparative example 10 |
| 26 | Ni: 0.15 | 1.70 | 18 | 0.12 | good | Embodiment 16 |
| 27 | Ni: 0.5 | 4.55 | 40 | 0.05 | good | Embodiment 17 |
| 28 | Ni: 0.9 | 12.06 | 80 | 0.02 | good | Embodiment 18 |
| 29 | Ni: 0.04 | 1.20 | 5 | 0.22 | good | Comparative example 11 |
| 30 | Ni: 1.15 | 12.01 | 127 | 0.01 | defective | Comparative example 12 |

As indicated in Table 1, the change in amount of diffusible hydrogen was listed according to changes in the average number of Kirkendall voids having a long diameter of 0.5 $\mu$m-5 $\mu$m per unit area, present in a region within 20 $\mu$m from the interface between the base steel sheet and the plating layer.

In this case, in embodiments 1 to 18 in which the plating layer, the average number of Kirkendall voids having a long diameter of 0.5 $\mu$m-5 $\mu$m per unit area, present in a region within 20 $\mu$m from the interface between the base steel sheet and the plating layer satisfied 8/1000 $\mu$m$^2$-100/1000 $\mu$m$^2$, the amount of diffusible hydrogen for the hot press-formed part was less than 0.2 ppm, such that hydrogen embrittlement resistance was excellent, and paint corrosion resistance was good.

Meanwhile, additionally, with respect to the embodiments 1 to 18, in the plating layer, the average number of Kirkendall voids having a long diameter of 2 $\mu$m-6 $\mu$m per unit area, present within 20 $\mu$m from the interface between the base steel sheet and the plating layer, satisfied 10/1000 $\mu$m$^2$-100/1000 $\mu$m$^2$.

In comparative examples 1, 3, 5, 7, 9 and 11 in which the average number of Kirkendall voids having a long diameter of 0.5 $\mu$m-5 $\mu$m per unit area, present in a region within 20 $\mu$m from the interface between the base steel sheet and the plating layer, the amount of diffusible hydrogen exceeded 0.2ppm as hydrogen absorbed during hot press-forming was not properly trapped, and accordingly, it was difficult to assure hydrogen embrittlement resistance.

Also, in comparative examples 2, 4, 6, 8, 10 and 12 in which, even when the composition of the present disclosure was satisfied, the average number of Kirkendall voids having a long diameter of 0.5 $\mu$m to 5 $\mu$m per unit area present in a region within 20 $\mu$m from the interface between the base steel sheet and the plating layer exceeded 100/1000 $\mu$m$^2$, the amount of diffusible hydrogen was reduced. However, cohesive force of the plating layer interface was weakened due to the formation of excessive Kirkendall voids, such that the plating layer was partially peeled during the hot forming or painting scribing process, and accordingly, paint corrosion resistance was excessively deteriorated and defects occurred.

(Experimental example 2)

The composition of the steel used for the present disclosure included 0.22% C - 0.25% Si - 1.25% Mn - 0.2% Cr - 0.03% Al - 0.01% P - 0.002% S - 0.03% Ti - 0.0025% B - 0.004% N, and as in Table 2 below, base steel sheets including various group 1 element contents were prepared, and a slab having each composition were manufactured to have a thickness of 40 mm through vacuum melting. The slab was maintained at 1200°C for 1 hour, hot-rolled to a hot-rolling end temperature of 900°C and coiled to a coiling temperature of 600°C. Thereafter, pickling, continuous annealing and plating were sequentially applied to the cold-rolled steel sheet obtained through cold-rolling. In this case, the pickling condition within the scope of the present disclosure and the continuous annealing condition for each zone were applied. More specifically, the HCl concentration and pickling time were 4,000g/L·s (here, HCl concentration of 200g/L, pickling time of 20 seconds were applied, and pickling temperature of 80°C were applied collectively), and as the annealing conditions for each zone for annealing, zone 1: 3.0°C/s, zone 2: 0.5°C/s, and zone 3: 0.3°C/s were applied collectively.

Also, during the plating, plating was performed by immersing the plating in a plating bath consisting of Al-9% Si-2% Fe and a balance of Fe and inevitable impurities.

Thereafter, hot press-forming was performed after heat-treatment at Ac3-950°C. In this case, the heating time was 6 minutes, the transfer time to the die was 10 seconds, and die quenching was applied.

To identify Kirkendall voids within 20 $\mu$m in the plating layer direction within the plating layer, a cross-section of the structure (samples were collected in the direction perpendicular to the rolling direction) was observed using scanning electron microscopy (SEM). Using the image observed as above, imaging was performed at magnification $\times$1000, and as indicated (measured on a hot press-formed part), the portion having black contrast present within the range may be identified as a Kirkendall void. By applying this magnification, the sample was surrounded with a rectangle having a thickness of 20 $\mu$m $\times$ length of 50 $\mu$m, and the average number of Kirkendall voids identified within the range was measured and limited to number/1000 $\mu$m$^2$, and the results are listed in Table 1.

To evaluate the amount of diffusible hydrogen for materials having various Kirkendall voids, the measurement was performed using thermal desorption analysis (TDA) equipment (Bruker G8: model name). The conditions for analyzing the amount of diffusible hydrogen included increasing the temperature to 400°C at 20°C/min, maintaining the time sufficient for the diffusible hydrogen peak to appear, and the diffused hydrogen curve was measured. Also, the total amount of diffusible hydrogen in steel was obtained by integrating the curves, and the results are listed in the Table.

Also, to evaluate hydrogen embrittlement resistance, bending stress was applied to a test sample having a width of 14.5 mm and a length of 73 mm. Also, a strain of 0.7% was applied to an outermost portion, the breakage time was measured after immersion in 0.1 N hydrochloric acid, and in the case in which no breakage occurred for more than 120 hours, the sample was marked "good," and in the case in which breakage occurred in less than 120 hours, the sample was marked "defective."

To confirm whether the concentrated layer was sufficiently formed on the base layer surface in the sample manufactured as above, the content of group 1 elements listed in Table 2 was analyzed using glow discharge optical emission spectrometry (GDS) using GDS850A (model name, manufactured by LECO), DC and RF equipment.

Also, to evaluate adhesion of electrodeposition coating, the ISO2409 standard was applied, a grid of 10 $\times$ 10 (width 1 mm) was applied to the painted surface with a blade, the adhesion test tape was placed parallel to the grid pattern, attached, and removed, and the area of the peeled painted layer was observed using a magnifying glass. In this case, when the sample had less than 5% of the grid area, the sample was evaluated as "good," and when the sample had 5% or higher of the area, the sample was evaluated as defective, and the results are listed in Table 2 below.

[Table 2]

| No. | Gro up 1 ele men ts con ten t (we igh t%) | Heat-treatm ent area at 700°C or higher (°C·s) | $D_{Fe}/D_{A~I}$ in B2 porti on in FIG. 4 | $D_{Fe}/D_{Al}$ Of A2 porti on in FIG. 4 | [relati onal express ion 2-1] $D_{B2}/D_{A2}$ | Averag e number of Kirken dall voids per unit area (/1000 $\mu m^2$) | Amount of diffus ible hydrog en (ppm) | Hydrog en embrit tlemen t resist ance | Adhes ion of elect rodep ositi on coati ng | Notes |
|---|---|---|---|---|---|---|---|---|---|---|
| 2-1 | Sb: 0.0 10 | 22063 | 0.587 | 0.061 0 | 9.62 | 13 | 0.223 | good | good | Embodiment 2-1 |
| 2-2 | Sb: 0.0 46 | 6511 | 0.595 | 0.059 3 | 10.03 | 41 | 0.099 | good | good | Embodiment 2-2 |
| 2-3 | Sb: 0.0 95 | 12113 | 0.608 | 0.057 5 | 10.58 | 97 | 0.021 | good | good | Embodiment 2-3 |
| 2-4 | Sb: 0.0 01 | 9205 | 0.581 | 0.063 9 | 9.10 | 5 | 0.420 | defect ive | good | Comparativ e example 2-1 |
| 2-5 | Sb: 0.0 10 | 4705 | 0.582 | 0.062 0 | 9.38 | 6 | 0.387 | defect ive | good | Comparativ e example 2-2 |
| 2-6 | Sb: 0.1 10 | 9002 | 0.620 | 0.055 4 | 11.19 | 113 | 0.010 | good | defec tive | Comparativ e example 2-3 |
| 2-7 | Sn: 0.0 18 | 20211 | 0.587 | 0.058 7 | 10.01 | 15 | 0.235 | good | good | embodiment 2-4 |
| 2-8 | Sn: 0.0 40 | 13885 | 0.591 | 0.057 2 | 10.32 | 42 | 0.105 | good | good | Embodiment 2-5 |
| 2-9 | Sn: 0.0 88 | 7347 | 0.607 | 0.056 7 | 10.71 | 88 | 0.037 | good | good | Embodiment 2-6 |
| 2-10 | Sn: 0.0 03 | 20001 | 0.580 | 0.062 1 | 9.34 | 4 | 0.388 | defect ive | good | Comparativ e example 2-7 |
| 2-11 | Sn: 0.0 18 | 4655 | 0.582 | 0.061 4 | 9.48 | 3 | 0.315 | defect ive | good | Comparativ e example 2-8 |
| 2-12 | Sn: 0.1 09 | 10034 | 0.621 | 0.055 0 | 11.29 | 115 | 0.012 | good | defec tive | Comparativ e example 2-9 |
| 2-13 | As: 0.0 09 | 9066 | 0.585 | 0.060 7 | 9.63 | 14 | 0.234 | good | good | Embodiment 2-7 |
| 2-14 | As: 0.0 37 | 10311 | 0.593 | 0.059 5 | 9.97 | 38 | 0.107 | good | good | Embodiment 2-8 |
| 2-15 | As: 0.0 89 | 6310 | 0.601 | 0.057 6 | 10.24 | 87 | 0.030 | good | good | Embodiment 2-9 |
| 2-16 | As: 0.0 04 | 18702 | 0.582 | 0.062 0 | 9.39 | 5 | 0.401 | defect ive | good | Comparativ e example 2-10 |
| 2-17 | As: 0.0 09 | 4801 | 0.581 | 0.061 4 | 9.46 | 3 | 0.307 | defect ive | good | Comparativ e example 2-11 |

(continued)

| No. | Group 1 elements content (weight%) | Heat-treatment area at 700°C or higher (°C·s) | $D_{Fe}/D_{Al}$ in B2 portion in FIG. 4 | $D_{Fe}/D_{Al}$ Of A2 portion in FIG. 4 | [relational expression 2-1] $D_{B2}/D_{A2}$ | Average number of Kirkendall voids per unit area (/1000 μm²) | Amount of diffusible hydrogen (ppm) | Hydrogen embrittlement resistance | Adhesion of electrodeposition coating | Notes |
|---|---|---|---|---|---|---|---|---|---|---|
| 2-18 | As: 0.108 | 7944 | 0.617 | 0.0557 | 11.08 | 108 | 0.011 | good | defective | Comparative example 2-12 |
| 2-19 | Bi: 0.013 | 14031 | 0.588 | 0.0608 | 9.67 | 16 | 0.230 | good | good | Embodiment 2-10 |
| 2-20 | Bi: 0.039 | 19064 | 0.601 | 0.0599 | 10.03 | 40 | 0.110 | good | good | Embodiment 2-11 |
| 2-21 | Bi: 0.087 | 5801 | 0.610 | 0.0584 | 10.44 | 90 | 0.040 | good | good | Embodiment 2-12 |
| 2-22 | Bi: 0.003 | 11012 | 0.583 | 0.0634 | 9.20 | 4 | 0.401 | defective | good | Comparative example 2-13 |
| 2-23 | Bi: 0.013 | 4870 | 0.580 | 0.0619 | 9.37 | 4 | 0.320 | defective | good | Comparative example 2-14 |
| 2-24 | Bi: 0.107 | 9145 | 0.626 | 0.0557 | 11.23 | 109 | 0.010 | good | defective | Comparative example 2-15 |

As indicated in Table 2, in embodiment 2-1-2-12 satisfying relational expression 2-1 according to the present disclosure, the amount of diffusible hydrogen reduced, such that hydrogen embrittlement resistance was excellent, and also adhesion of electrodeposition coating was also excellent.

In the case of comparative example 2-1-2-15, which did not satisfy relational expression 2-1, at least one properties of hydrogen embrittlement resistance and adhesion of electrodeposition coating was degraded as compared to the embodiments.

Meanwhile, although not limited thereto, and additionally, in embodiments 2-2, 2-3, 2-5, 2-6, 2-8, 2-9, 2-11, and 2-12, in the plating layer, the average number per unit area of Kirkendall voids having a diameter of 2 μm-6 μm present in a region within 20 μm of the plating layer from the interface between the base steel sheet and the plating layer satisfied 10/1000 μm²-100/1000 μm². Also, referring to the GDS analysis results, when measuring the weight% contents of $X_{max}$ and $X_{coat}$, the embodiments 2-2, 2-3, 2-5, 2-6, 2-8, 2-9, 2-11, 2-12 satisfied relational expression 2-2.

[Reference numbers]

11: Kirkendall void
100: Interface between base steel sheet and plating layer

Claims

1. A hot press-formed part, comprising:

a base steel sheet; and
a plating layer on at least one surface of the base steel sheet,
wherein the plating layer comprises an average number per unit area of Kirkendall voids having a long diameter of 0.5 µm-5 µm present in a region within 20 µm from an interface between the base steel sheet and the plating layer satisfies 8/1000 µm$^2$-100/1000 µm$^2$.

2. The hot press-formed part of claim 1, wherein the average number per unit area of Kirkendall voids satisfies 10/1000 µm$^2$-95/1000 µm$^2$.

3. The hot press-formed part of claim 1, wherein the average number per unit area of Kirkendall voids satisfies 18/1000 µm$^2$-92/1000 µm$^2$.

4. The hot press-formed part of claim 1, wherein the base steel sheet comprises, by weight%, C: 0.02-0.5%, Si: 0.001-2%, Al: 0.001-1%, Mn: 0.1-4%, P: 0.05% or lower (excluding 0%), S: 0.02% or lower (excluding 0%), N: 0.02% or lower (excluding 0%), Ti: 0.1% or lower (including 0%), B: 0.0001-0.01%, Mo: 1.00% or lower (including 0%), V: 1.00% or lower (including 0%), Ca: 0.01% or lower (including 0%), Nb: 0.1% or lower (including 0%), W: 1% or lower (including 0%), REM: 0.3% or lower (including 0%), and a balance of Fe and inevitable impurities.

5. The hot press-formed part of claim 1, wherein the base steel sheet comprises 0.005-1 weight% of one or more group 1 elements selected from a group consisting of Sb, Sn, As, Bi, Cu and Ni.

6. The hot press-formed part of claim 1,

wherein the base steel sheet comprises one or more group 1 elements selected from a group consisting of Sb, Sn, As, Bi, Cu and Ni,
wherein the base steel sheet comprises 0.005-0.1% of each of one or more elements selected from a group consisting of Sb, Sn, As and Bi among the group 1 elements, and
wherein the base steel sheet comprises 0.05-1% of each of one or more elements selected from a group consisting of Cu and Ni among the group 1 elements.

7. The hot press-formed part of claim 1,

wherein the base steel sheet further comprises one or more group 1 elements selected from a group consisting of Sn, As, Bi, Cu and Ni, and satisfies relational expression 1 as below:

[Relational expression 1]

$$\frac{X_{\max}}{X_{coat}} \geq 1.5$$

where $X_{coat}$ indicates an average X content in the plating layer, and a unit thereof is weight%, $X_{max}$ indicates a maximum value of an X content in the plating layer, and a unit thereof is weight%, and X indicates one or more group 1 elements selected from a group consisting of Sb, Sn, As, Bi, Cu and Ni.

8. The hot press-formed part of claim 1, wherein the plating layer comprises an average number per unit area of Kirkendall voids having a long diameter of 2 µm to 6 µm present in a region within 20 µm from an interface between the base steel sheet and the plating layer satisfies 10/1000 µm$^2$ to 100/1000 µm$^2$.

9. A method of manufacturing a hot forming part, the method comprising:

reheating a steel slab comprising, by weight%, C: 0.02-0.5%, Si: 0.001-2%, Al: 0.001-1%, Mn: 0.1-4%, P: 0.05% or lower (excluding 0%), S: 0.02% or lower (excluding 0%), N: 0.02% or lower (excluding 0%), Ti: 0.1% or lower (including 0%), B: 0.0001-0.01%, Mo: 1.00% or lower (including 0%), V: 1.00% or lower (including 0%), Ca: 0.01% or lower (including 0%), Nb: 0.1% or lower (including 0%), W: 1% or lower (including 0%), REM: 0.3% or lower (including 0%), and a balance of Fe and inevitable impurities, at 1050-1300°C;
obtaining a hot-rolled steel sheet by finish-rolling the reheated steel slab at 800-950°C;
coiling the hot-rolled steel sheet at 500-700°C;

pickling the coiled hot-rolled steel sheet such that a product of acid concentration and pickling time is 800-10,000g/L·s;

continuous annealing the pickled steel sheet by controlling an average temperature increase rate for each zone to satisfy equations 1 to 3 as below;

plating the continuously annealed steel sheet by immersing the steel sheet in a plating bath comprising aluminum or aluminum alloy; and

heat-treating the plated steel sheet at Ac3-950°C for 1-1000 seconds and hot press-forming the steel sheet:

$$1.5°C/s \leq \text{average temperature increase rate in zone 1 (°C/s)} \leq 10.0°C/s \quad \text{[Equation 1]}$$

$$0.5°C/s \leq \text{average temperature increase rate in zone 2 (°C/s)} \leq 1.0°C/s \quad \text{[Equation 2]}$$

$$0.01°C/s \leq \text{average temperature increase rate in zone 3 (°C/s)} \leq 0.4°C/s \quad \text{[Equation 3]}$$

where zone 1 refers to a section until a surface temperature of the steel sheet reaches 500°C, zone 2 refers to a section until a surface temperature of the steel sheet reaches 500°C to 700°C, and zone 3 refers to a section until a surface temperature of the steel sheet reaches a maximum temperature.

10. A hot press-formed part, comprising:

a base steel sheet; and
a plating layer on at least one surface of the base steel sheet,
wherein relational expression 2-1 as below is satisfied:

[Relational expression 2-1]

$$9.5 \leq D_{B2}/D_{A2} \leq 11.0$$

where $D_{B2}$ indicates an absolute value of $D_{Fe}/D_{Al}$ in a region in which an atomic content ratio of aluminum (Al) in the hot press-formed part is 0.25-0.45, $D_{A2}$ indicates an absolute value of $D_{Fe}/D_{Al}$ in a region in which an atomic content ratio of aluminum (Al) in the hot press-formed part is 0.25-0.45, and in this case, $D_{Fe}$ indicates diffusivity of iron (Fe), and $D_{Al}$ indicates diffusivity of aluminum (Al).

11. The hot press-formed part of claim 10, wherein a microstructure of the base steel sheet comprises one or more structures selected from a group consisting of martensite and bainite.

12. The hot press-formed part of claim 10, wherein an average number per unit area of Kirkendall voids having a diameter of 0.5 $\mu$m-5 $\mu$m present in a region within 20 $\mu$m in a direction of the plating layer side from an interfacial surface between the base steel sheet and the plating layer, satisfies 7/1000 $\mu$m$^2$-100/1000 $\mu$m$^2$.

13. The hot press-formed part of claim 12, wherein an average number per unit area of the Kirkendall void satisfies 10/1000 $\mu$m$^2$-95/1000 $\mu$m$^2$.

14. The hot press-formed part of claim 12, wherein an average number per unit area of the Kirkendall void satisfies 18/1000 $\mu$m$^2$-92/1000 $\mu$m$^2$.

15. The hot press-formed part of claim 10, wherein the base steel sheet comprises, by weight%, C: 0.02-0.5%, Si: 0.001-2%, Al: 0.001-1%, Mn: 0.1-4%, P: 0.05% or lower (excluding 0%), S: 0.02% or lower (excluding 0%), N: 0.02% or lower (excluding 0%), Ti: 0.1% or lower (including 0%), B: 0.0001-0.01%, Mo: 1.00% or lower (including 0%), V: 1.00% or lower (including 0%), Ca: 0.01% or lower (including 0%), Nb: 0.1% or lower (including 0%), W: 1% or lower (including 0%), REM: 0.3% or lower (including 0%), and a balance of Fe and inevitable impurities.

16. The hot press-formed part of claim 10, wherein the base steel sheet independently comprises 0.005weight%-1weight% of one or more group 1 elements selected from a group consisting of Sb, Sn, As, Bi, Cu and Ni.

**17.** The hot press-formed part of claim 10,

wherein the base steel sheet comprises one or more group 1 elements selected from a group consisting of Sb, Sn, As, Bi, Cu and Ni,

wherein the base steel sheet comprises 0.005-0.1% of each of one or more elements selected from a group consisting of Sb, Sn, As and Bi among the group 1 elements independently, and

wherein the base steel sheet comprises 0.05-1% of each of one or more elements selected from a group consisting of Cu and Ni among the group 1 elements independently.

**18.** The hot press-formed part of claim 10,

wherein the base steel sheet further comprises one or more group 1 elements selected from a group consisting of Sn, As, Bi, Cu and Ni, and satisfies relational expression 2-2 as below:

[Relational expression 2-2]

$$\frac{X_{\max}}{X_{coat}} \geq 1.5$$

where $X_{coat}$ indicates an average X content in the plating layer, and a unit thereof is weight%, $X_{max}$ indicates a maximum value of an X content in the plating layer, and a unit thereof is weight%, and X indicates one or more group 1 elements selected from a group consisting of Sb, Sn, As, Bi, Cu and Ni.

**19.** The hot press-formed part of claim 10, wherein, in the plating layer, an average number per unit area of Kirkendall voids having a diameter of 2 $\mu$m-6 $\mu$m present in a region within 20 $\mu$m in a direction of the plating layer side from an interface between the base steel sheet and the plating layer, satisfies 10/1000 $\mu m^2$-100/1000 $\mu m^2$.

**20.** A method of manufacturing a hot press-formed part, the method comprising:

reheating a steel slab including, by weight%, C: 0.02-0.5%, Si: 0.001-2%, Al: 0.001-1%, Mn: 0.1-4%, P: 0.05% or lower (excluding 0%), S: 0.02% or lower (excluding 0%), N: 0.02% or lower (excluding 0%), Ti: 0.1% or lower (including 0%), B: 0.0001-0.01%, Mo: 1.00% or lower (including 0%), V: 1.00% or lower (including 0%), Ca: 0.01% or lower (including 0%), Nb: 0.1% or lower (including 0%), W: 1% or lower (including 0%), REM: 0.3% or lower (including 0%), and a balance of Fe and inevitable impurities, at 1050-1300°C;

obtaining a hot-rolled steel sheet by finish-rolling the reheated steel slab at 800-950°C;

coiling the hot-rolled steel sheet at 500-700°C;

pickling the coiled hot-rolled steel sheet such that a product of acid concentration and pickling time is 800-10,000g/L·s;

continuous annealing the pickled steel sheet by controlling an average temperature increase rate for each zone to satisfy equations 1 to 3 as below;

plating the continuously annealed steel sheet by immersing the steel sheet in a plating bath comprising aluminum or aluminum alloy; and

heat-treating the plated steel sheet at Ac3-950°C for 1-1000 seconds and hot press-forming the steel sheet,

wherein, during the continuous annealing, a heat-treatment area over time at 700°C or higher satisfies 5,000°C·s -25,000°C·s:

1.5°C/s ≤ average temperature increase rate in zone 1 (°C/s) ≤ 10.0°C/s       [Equation 1]

0.5°C/s ≤ average temperature increase rate in zone 2 (°C/s) ≤ 1.0°C/s       [Equation 2]

0.01°C/s ≤ average temperature increase rate in zone 3 (°C/s) ≤ 0.4°C/s       [Equation 3]

where zone 1 refers to a section until a surface temperature of the steel sheet reaches 500°C, zone 2 refers to a section until a surface temperature of the steel sheet reaches 500°C to 700°C, and zone 3 refers to a section until a surface temperature of the steel sheet reaches a maximum temperature.

FIG. 1

FIG. 2

Kirkendall void

10μm

FIG. 3

SURFACE-CONCENTRATION
HEAT-TREATED AREA

TEMPERATURE (℃)

700

TIME (SECONDS)

FIG. 4

Ln(100%)

Slope ∝ $D_{Fe(A2)}$

Ln(Fe)

Ln C
*atomic ratio

Slope ∝ $D_{Fe(B2)}$

Ln(45%)

Slope ∝ $D_{Al(B2)}$

Ln(25%)
Ln(20%)

Slope ∝ $D_{Al(A2)}$

B2

A2

Ln(Al)

Ln(1%)

0

$X^2$

## INTERNATIONAL SEARCH REPORT

| International application No. |
|---|
| **PCT/KR2023/005686** |

### A. CLASSIFICATION OF SUBJECT MATTER

**C23C 2/12**(2006.01)i; **C23C 2/02**(2006.01)i; **C22C 38/04**(2006.01)i; **C22C 38/02**(2006.01)i; **C22C 38/00**(2006.01)i; **C22C 38/14**(2006.01)i; **C22C 38/12**(2006.01)i; **C21D 8/02**(2006.01)i

According to International Patent Classification (IPC) or to both national classification and IPC

### B. FIELDS SEARCHED

Minimum documentation searched (classification system followed by classification symbols)

C23C 2/12(2006.01); B21D 22/20(2006.01); B23K 20/00(2006.01); C21D 9/46(2006.01); C22C 21/02(2006.01); C22C 38/00(2006.01); C22C 38/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열간 프레스(hot press), 도금(plating), 소둔(anneal), 커켄달(Kirkendall), 기공(void)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0092352 A (NIPPON STEEL CORPORATION) 03 August 2020 (2020-08-03)<br>See paragraphs [0092], [0126]-[0127], [0142]-[0146], [0158] and [0160], claims 1 and 3 and figure 1. | 1-8,10-19 |
| A | | 9,20 |
| A | KR 10-2020-0013703 A (JFE STEEL CORPORATION) 07 February 2020 (2020-02-07)<br>See paragraph [0155] and claims 7-10. | 1-20 |
| A | WO 2022-014645 A1 (NIPPON STEEL CORPORATION) 20 January 2022 (2022-01-20)<br>See claims 1 and 5-6. | 1-20 |
| A | CN 111394679 A (YUCAITANG (SUZHOU) MATERIAL TECHNOLOGY CO., LTD.) 10 July 2020 (2020-07-10)<br>See claim 1 and figure 1. | 1-20 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 August 2023** | **14 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2023/005686** |

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0002161 A (HYUNDAI STEEL COMPANY) 06 January 2022 (2022-01-06)<br>See paragraph [0064] and claim 1. | 1-20 |

Form PCT/ISA/210 (second sheet) (July 2022)

INTERNATIONAL SEARCH REPORT
Information on patent family members

International application No.

**PCT/KR2023/005686**

| Patent document cited in search report | | | Publication date (day/month/year) | Patent family member(s) | | | Publication date (day/month/year) |
|---|---|---|---|---|---|---|---|
| KR | 10-2020-0092352 | A | 03 August 2020 | CA | 3090649 | A1 | 22 August 2019 |
| | | | | CN | 110573644 | A | 13 December 2019 |
| | | | | CN | 110573644 | B | 16 July 2021 |
| | | | | EP | 3623493 | A1 | 18 March 2020 |
| | | | | JP | 6607338 | B1 | 20 November 2019 |
| | | | | JP | WO2019-160106 | A1 | 27 February 2020 |
| | | | | KR | 10-2426324 | B1 | 29 July 2022 |
| | | | | MX | 2020005505 | A | 03 September 2020 |
| | | | | TW | 201934779 | A | 01 September 2019 |
| | | | | TW | I682066 | B | 11 January 2020 |
| | | | | US | 11530474 | B2 | 20 December 2022 |
| | | | | US | 2021-0095368 | A1 | 01 April 2021 |
| | | | | WO | 2019-160106 | A1 | 22 August 2019 |
| KR | 10-2020-0013703 | A | 07 February 2020 | CN | 110832097 | A | 21 February 2020 |
| | | | | CN | 110832097 | B | 29 October 2021 |
| | | | | EP | 3647450 | A1 | 06 May 2020 |
| | | | | EP | 3647450 | B1 | 28 April 2021 |
| | | | | JP | 6540908 | B2 | 10 July 2019 |
| | | | | JP | WO2019-003542 | A1 | 27 June 2019 |
| | | | | KR | 10-2356747 | B1 | 27 January 2022 |
| | | | | MX | 2019015322 | A | 17 February 2020 |
| | | | | US | 11236406 | B2 | 01 February 2022 |
| | | | | US | 2020-0370140 | A1 | 26 November 2020 |
| | | | | WO | 2019-003450 | A1 | 03 January 2019 |
| WO | 2022-014645 | A1 | 20 January 2022 | CN | 115135798 | A | 30 September 2022 |
| | | | | JP | 7260840 | B2 | 19 April 2023 |
| | | | | JP | WO2022-014645 | A1 | 20 January 2022 |
| CN | 111394679 | A | 10 July 2020 | BR | 112022025079 | A2 | 27 December 2022 |
| | | | | BR | 212022024841 | U2 | 03 January 2023 |
| | | | | CA | 3185460 | A1 | 16 December 2021 |
| | | | | CN | 111394679 | B | 28 August 2020 |
| | | | | CN | 116157544 | A | 23 May 2023 |
| | | | | EP | 4148160 | A1 | 15 March 2023 |
| | | | | KR | 10-2023-0022425 | A | 15 February 2023 |
| | | | | WO | 2021-248635 | A1 | 16 December 2021 |
| KR | 10-2022-0002161 | A | 06 January 2022 | BR | 112022026329 | A2 | 17 January 2023 |
| | | | | CA | 3184606 | A1 | 06 January 2022 |
| | | | | CN | 114127324 | A | 01 March 2022 |
| | | | | EP | 3933061 | A1 | 05 January 2022 |
| | | | | KR | 10-2330812 | B1 | 24 November 2021 |
| | | | | US | 11225050 | B1 | 18 January 2022 |
| | | | | US | 2021-0402740 | A1 | 30 December 2021 |
| | | | | WO | 2022-004969 | A1 | 06 January 2022 |

Form PCT/ISA/210 (patent family annex) (July 2022)

**EP 4 520 849 A1**

**REFERENCES CITED IN THE DESCRIPTION**

**Patent documents cited in the description**

- US 6296805 B